# EUROPEAN PATENT APPLICATION

(11) **EP 4 704 279 A1**
(43) Date of publication of application: **04.03.2026**
(21) Application number: 25198486.0
(22) Date of filing: 27.08.2025
(51) Int. Cl.: H02J 1/10, H02J 3/38, H02J 7/35, H02M 1/00, H02M 3/00

(54) **APPARATUS, SYSTEM, AND METHODS FOR OPTIMIZING POWER PRODUCTION FROM A POWER GENERATING APPARATUS**

(30) Priority: 27.08.2024 US 202463687405 P; 25.09.2024 US 202463698734 P
(71) Applicant: Solaredge Technologies Ltd., Herzeliya 4673335 (IL)
(72) Inventor: ZALTZHENDLER, Oren, 4673335 Herzeliya (IL); EITAN, Gideon, 4673335 Herzeliya (IL); YAACOBI, Amnon, 4673335 Herzeliya (IL)
(74) Representative: V.O.

(57) **Abstract**

Apparatuses, systems and methods are described for optimizing power production from power generating devices by dynamically grouping the power generators. The power generating devices may be dynamically grouped into power sources according to a Maximum Power Point of the power generators, and the power output of the grouped generators may be controlled by alternatively connecting the output of the power sources. The output power may also be optimized by dynamically grouping the power generators, so that a maximum power may be generated.

## Description

### FIELD OF THE DISCLOSURE

The disclosure relates generally to power sources. More specifically, the disclosure provides an apparatus system and methods for optimizing power production from a power source

### BACKGROUND OF THE DISCLOSURE

A power generating apparatus may comprise one or more power sources, and the power sources may comprise one or more sets of corresponding one or more power generators. For example, a photovoltaic panel may comprise photovoltaic substring, and the photovoltaic substring may comprise photovoltaic cells. A battery may comprise battery packs, and the battery pack may comprise battery cells. A bank of capacitors (e.g., a capacitors bank) may comprise one or more sets of capacitors. Typically, power produced by the power generating apparatus may be optimized based on the combined power from all the power sources in the power generating apparatus. Power generating systems may use power conversion circuits and apparatuses such as direct current (DC) to DC converters, and/or DC to alternating current (AC) converters.

### BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

The disclosure herein describes various devices, apparatuses, systems and methods for optimizing power production from a power generating apparatus (e.g., a photovoltaic panel, a battery) by dynamically grouping power generators (e.g., photovoltaic cells, battery packs) of the power generating apparatus, into power sources. A first aspect of the disclosure provides for determining a grouping of the power generators based on a Maximum Power Point (MPP) of the power generators.

A second aspect of the disclosure provides for alternately connecting, using a multiplexer, the power sources to a power converter, determining an MPP of each power source and alternately drawing power from the power sources based on the corresponding MPPs.

A third aspect of the disclosure provides for optimizing power production by a power generating apparatus by determining groupings of power generators into power sources, which yield the maximum power. According to the third aspect, a first power source and a second power source may be alternately connected to a power converter. The first power source may comprise a first set of one or more power generators. The second power source may comprise a second set of one or more power generators, and at least one alternating power generator. The MPP of each power source of the first and second power sources may be determined. A first total combined power of the first and second power source may be determined based on the corresponding MPPs. Further according to the third aspect, the first set of one or more power generators and the at least one alternating power generator (which may define a third power source) may be connected to the power converter and the MPP of this third power source may be determined. The second set of one or more power generators (which may define a fourth power source) may be connected to the power converter and the MPP of this fourth power source may be determined. A second total combined power may be determined based on the MPPs of the third power source and the MPP of the fourth power source. If the first total combined power is higher than the second total combined power, the first power source and the second power source may be alternately connected to the power converter. If the first total combined power is lower than the second total combined power, the third power source and the fourth power source may be alternately connected to the power converter.

A fourth aspect of the disclosure provides for optimizing power production by a power generating apparatus by determining groupings of sets power generators into power sources, which yield the maximum power. According to the fourth aspect, a first power source, a second power source, and an alternating power generator may be alternately connected to a power converter. The first power source may comprise a first set of one or more power generators. The second power source may comprise a second set of one or more power generators. The MPP of the first power source, the second power source, and the alternating power generator may be determined. If the MPP voltage of the alternating power generator, and the MPP voltage of the first power source are equal, a third power source and the second power source may be alternately connected to the power converter, where the third power source comprises the first set of power generators and the alternating power generator. If the MPP voltage of the alternating power generator, and the MPP voltage of the second power source are equal, a fourth power source and the first power source may be alternately connected to the power converter, where the fourth power source comprises the second set of power generators and the alternating power generator. If the MPP voltages of the first power source, the second power source, and the alternating power generator are different, the first power source, the second power source, and the alternating power generator may be alternately connected to the power converter.

A fifth aspect of the disclosure provides a multiple input single output (MISO) resonant converter. A MISO resonant converter, according to the disclosure herein, may combine power from a plurality of power sources by generating a sequence of waveforms during a sequence of separate time-periods. Each time-period of the sequence of separate time-periods may correspond to an associated power source. The MISO resonant converter according to the first aspect of the disclosure herein may comprise a waveforms generator and a resonant circuit. The waveforms generator may comprise a multiplexer and a complementary switch. A controller may controller the multiplexer and the complementary switch so as to generate, during the sequence of separate time-periods, a corresponding sequence of waveforms, where each waveform may correspond to a power source of the plurality of power sources. By controlling the duration of the time-periods in the sequence of time-periods, the controller may control power drawn from the corresponding power source and/or an output voltage of the MISO resonant converter

### BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:
Figure 1A shows an apparatus for optimizing production of energy from a power generating apparatus;
Figure 1B shows a method for determining a grouping of power generators in a power generating apparatus, into power sources;
Figure 1C shows a method for drawing power from a power generating apparatus;
Figures 2A-2D show an example of an apparatus comprising a power generating apparatus comprising five (5) power generators grouped into a plurality of power sources;
Figure 2E shows an example of a voltage versus time graph of voltage levels generated by power sources;
Figures 3A and 3B show an example method for optimizing power production from a power generating apparatus;
Figures 4A-4E shows an example of an apparatus comprising a power generating apparatus that comprises five (5) power generators grouped into two power sources;
. Figure 4F shows an example of a power versus voltage curve 406 (e.g., a PV-curve) representing the relationship between power and voltage for power generator 110-3 at given irradiance conditions;
Figures 5A and 5B show a method for optimizing power production from a power generating apparatus;
Figure 6 shows an example system comprising two power converters connected to a multiplexer;
Figure 7 shows an example of an apparatus, where the power generators are photovoltaic cells;
Figure 8 shows an example of an apparatus, where the power generators are battery packs;
Figures 9A-9C show an example of multiplexer which may be used in an apparatus; and
Figure 10A, shows an example of a power device used for optimizing power production from a power generating apparatus.
Figure 10B shows an example power device using a MISO resonant converter according to the disclosure herein.
Figure 11A shows an example MISO resonant converter according to the disclosure herein.
Figures 11B-11F show examples of a MISO resonant converter according to the disclosure herein.
Figure 12A shows example waveforms of a MISO resonant converter according to the disclosure herein.
Figures 12B and 12C show examples of power vs frequency plots for a frequency of a resonant circuit using a MISO resonant converter according to the disclosure herein.
Figure 12D shows example simulation results of a MISO resonant converter according to the disclosure herein.
Figures 13 and 14 show example waveforms of a MISO resonant converter according to the disclosure herein.
Figures 15A-15B show example waveforms of a MISO resonant converter according to the disclosure herein with pulse skipping.
Figure 15C shows example simulation results of a MISO resonant converter according to the disclosure herein with pulse skipping.
Figure 16 shows an example of a control loop for controlling the power, using MISO resonant converter according to the disclosure herein, from a plurality of power sources, where the plurality power sources are constant DC voltage power sources.
Figure 17 shows an example of a control loop for controlling the output voltage of a MISO resonant converter according to the disclosure herein, where plurality power sources are constant DC voltage power sources.
Figure 18 shows an example of a method for a MISO resonant converter according to the disclosure herein.
Figure 19 shows an example method for controlling the power from plurality of power sources, using MISO resonant converter according to the disclosure herein, where plurality power sources are constant DC voltage power sources.
Figure 20 shows an example method for controlling the output voltage of a MISO resonant converter according to the disclosure herein, where plurality power sources are constant DC voltage power sources.
Figure 21 shows an example method for determining a maximum power point of a power source such as a photovoltaic module, a photovoltaic sub-string, and/or a photovoltaic cell using a MISO resonant converter according to the disclosure herein.
Figures 22A1, 22A2 and 22A3, 22B, 22B2 and 22B3, 22C1, 22C2 and 22C3, and 22D1, 22D2 and 22D3, show waveforms related to MPPT in a MISO resonant converter according to the disclosure herein.
Figure 23 shows an example of a control loop that may perform MPPT using a MISO resonant converter according to the disclosure herein, from a plurality of power sources.
Figure 24 shows an example method for power setpoint tracking (e.g., MPPT) with MISO resonant converter according to the disclosure herein.
Figures 25A-25D shows various switches which may be used as switches for methods describe herein.
Figures 26A and 26B shows examples of other resonant circuit configurations which may be used in a MISO resonant converter according to the disclosure herein.

### DETAILED DESCRIPTION OF THE DISCLOSURE

In the following description of the various embodiments, reference is made to the accompanying drawings, which form a part hereof, and in which is shown by way of illustration various embodiments in which the disclosure may be practiced. It is to be understood that other embodiments may be utilized and structural and functional modifications may be made without departing from the scope of the present disclosure.

The disclosure herein, describes various devices, apparatuses, systems and methods for optimizing power production by a power generating apparatus, which may comprise two or more power sources. Each power source of the two or more power sources may comprise a plurality of power generators, divided in to at least two sets of power generators, a first set of at least one power generator and a second set of at least one power generator. A power generator may be a device which generates electric power, from which a power source may be constructed. For example, when the power generating apparatus is a photovoltaic array, the photovoltaic array may be constructed from two or more photovoltaic strings of photovoltaic panels. In the photovoltaic array example, the two or more power sources are the two or more strings, and the power generators are the photovoltaic panels. For example, when the power generating apparatus is a photovoltaic panel, the photovoltaic panel may comprise two or more substrings of photovoltaic cells or different groupings of photovoltaic cells. In the photovoltaic panel example, the two or more power sources may be the two or more photovoltaic substrings and the power generators may be the photovoltaic cells. For example, when power generating apparatus is a battery, the battery may be constructed from two or more battery packs of battery cells. In the battery example, the two or more power sources may be the two or more battery packs, and the power generators may be the battery cells.

According to the disclosure herein, for optimizing power production by the power generating apparatus, the power generating apparatus may comprise at least one additional power generator, which may be dynamically connected to either one of the at least two power sources, and/or define a new power source. The disclosure herein may describe apparatus, devices and various methods for optimizing power production by a power generating apparatus using such dynamic connections. In the disclosure herein, optimizing power production by the power generating apparatus is described with respect to maximizing the power generated by the power generating apparatus. However, the power production by the power generating apparatus may be optimized with respect to other parameters such as, for example, maximizing panel lifetime, maximizing efficiency, minimizing power clipping, and/or minimizing current ripple.

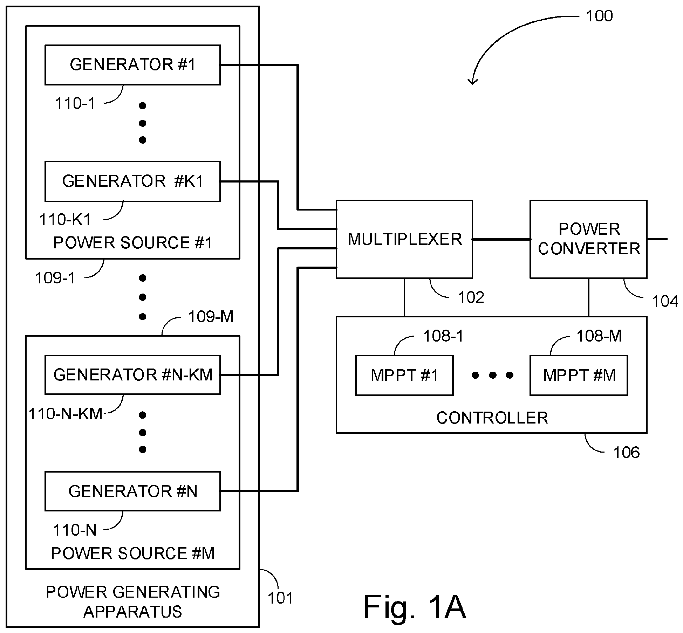

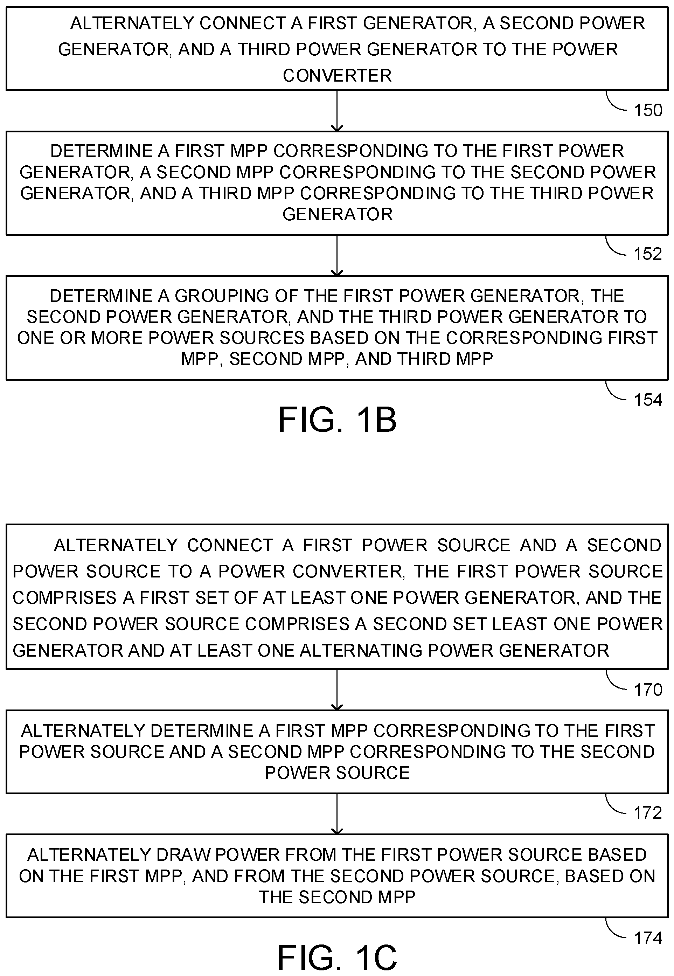

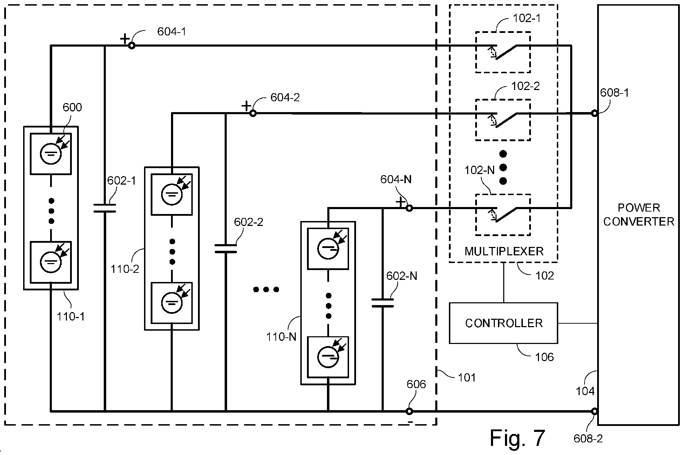

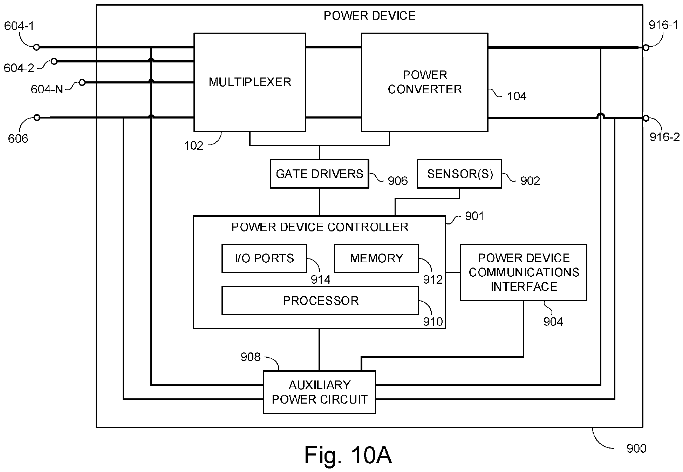

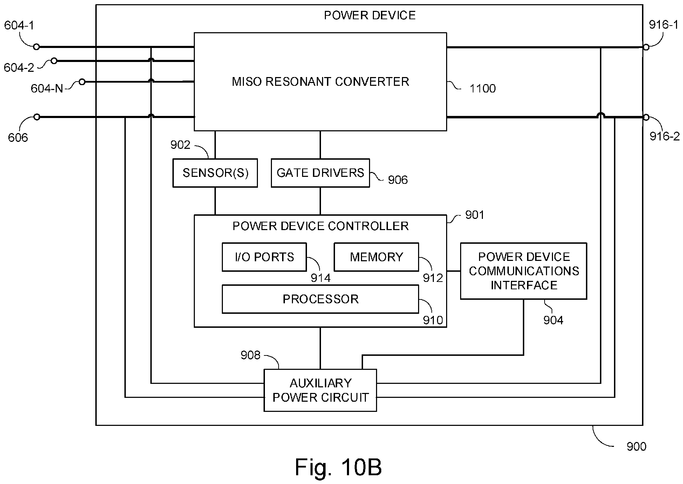

Figure 1A shows an apparatus 100 for optimizing production of energy from a power generating apparatus. Apparatus 100 may comprise a power generating apparatus 101, a multiplexer 102, a power converter 104 and a controller 106. Power generating apparatus 101 may comprise a plurality, N, of power generators 110-1 through 110-N. The plurality of power generators may be divided into a plurality, M, of power sources 109-1 through 109-M. Power source 109-1 may comprise a first set of power generators 110-1 through 110-K1. Power source 109-M may comprise a second set of power generators 110-N-KM through 110-N. Controller 106 may comprise a plurality of, M, Maximum Power Point Tracking (MPPT) modules 108-1-108-M. An MPPT module, such as MPPT modules 108-1 through 108-M may be implemented using a memory corresponding to each group and/or module, and at least one MPP tracker (e.g., which may use an MPP algorithm such as perturb and observe or incremental conductance). Controller 106 is further described herein as part of Figure 10. Each of power generators 110-1 through 110-N may by coupled to multiplexer 102. Multiplexer 102 may comprise a plurality of switches, configured to alternate between a conducting state and a non-conducting state. Multiplexer 102 is further described herein as part of Figures 7, 8, 9A-9C. Controller 106 may be coupled to multiplexer 102 and to power converter 104. The operation of apparatus 100 is further described herein as part of Figures 1B-1C, 2A-2E, 3A-3B, 4A-4F, 5A-5B, 6, 7, 8, 9A-9C, and 10. According to the disclosure herein, multiplexer 102, power converter 104, and controller 106 may be integrated (e.g., within the same housing and/or over common substrates) with power generating apparatus 101. For example, in cases in which power generating apparatus is a photovoltaic panel, multiplexer 102, power converter 104, and controller 106 may be integrated with the photovoltaic panel. In cases in which power generating apparatus is a battery, multiplexer 102, power converter 104, and controller 106 may be integrated with the battery.

Figure 1B shows a method for determining a grouping of power generators (e.g., power generators 110-1 through 110-N) in power generating apparatus 101, into power sources (e.g., powers sources 109-1-10-M). In step 150, alternately connect, using multiplexer 102, a first generator 110-N, a second power generator, and a third power generator to power converter 104. Multiplexer 102 may be controlled by controller 106.

In step 152, determine, by controller 106, a first MPP corresponding to the first power generator, a second MPP corresponding to the second power generator, and a third MPP corresponding to the third power generator. For example, controller 106 may determine an MPP using an MPPT algorithm.

In step 154, determine, by controller 106, a grouping of the first power generator, the second power generator, and the third power generator to one or more power sources based on the corresponding first MPP, second MPP, and third MPP. For example, controller 106 may group power sources by determining MPPs that are within a determined difference from each other, to form a power source.

Figure 1C shows a method for drawing power from power generating apparatus 101. In step 170, controller 106 may control multiplexer 102 to alternately connect a first power source (e.g., power source 109-1) and a second power source (e.g., power source 109-M) to power converter 104. The first power source may comprise a first set of at least one power generator. For example, power source 109-1 comprises power generators 110-1-110-K1. The second power source may comprise a second set of at least one power generator and at least one alternating power generator. For example, power source 109-M may comprise power generators 110-N-KM through110-N.

In step 172, the controller 106 may determine, alternately, a first MPP corresponding to the first power source and a second MPP corresponding to the second power source.

In step 174, the power converter 104 may draw power, alternately, from the first power source, based on the first MPP, and from the second power source, based on the second MPP. The power converter 104 may be controlled by controller 106.

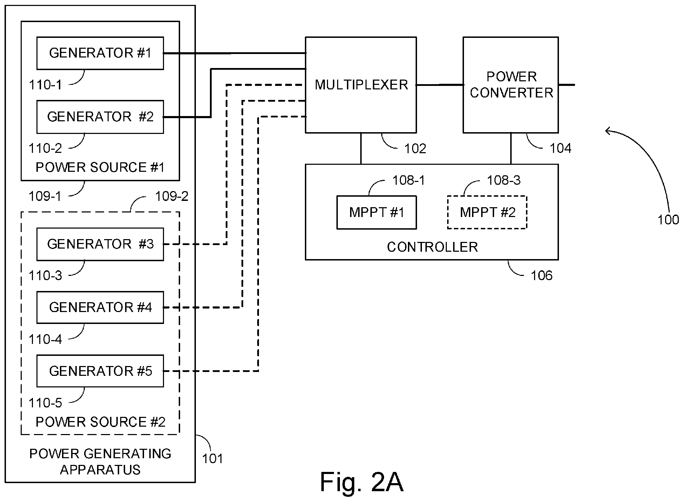

As described herein, a grouping of power generators may change dynamically. For example, when the MPP of the power generated by a power generator changes, that power generator may move from one power source to another. Thus, by dynamically changing the grouping of power generators, the power produced by the power generating apparatus may be optimized. As described herein, Figures 2A-2E, 3A-3B, 4A-4E, 5A-5B, show examples of how such dynamic grouping may be achieved.

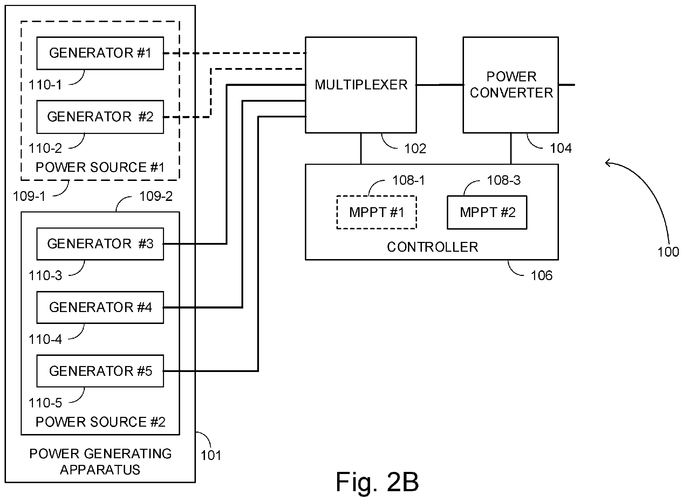

Figures 2A-2E shows an example of apparatus 100 comprising power generating apparatus 101 comprising five (5) power generators 110-1 through 110-5 grouped into a plurality of power sources (e.g., power source 109-1 and power source 109-2). Thus, controller 106 may comprise two MPPT modules, a first MPPT module 108-1 and a second MMPT module 108-2. With reference to Figure 2A and 2B, power source 109-1 may comprise two (2) power generators 110-1 and 110-2. Power source 109-2 may comprise three (3) power generators 110-3 through 110-5. One or more of power sources 110-3 through 110-5 in power source 109-2 may be an alternating power generator, as described herein. Figure 2A shows an example where controller 106 may control multiplexer 102 to connect power generators 110-1 and 110-2 of power source 109-1 to power converter 104. Controller 106 may determine, using first MPPT module 108-1, a first MPP, P1, of power source 109-1. Figure 2B shows an example where controller 106 may control multiplexer 102 to connect power generators 110-4 and 110-5 of power source 109-2 to power converter 104. Controller 106 may determine, using second MPPT module 108-2, a second MPP, P2, of power source 109-2. Controller 106 may determine a first combined power produced by the first power source 109-1 and second power source 109-2 (e.g., by summing the corresponding MPPs, P1 + P2).

After determining the first MPP for power source 109-1 and the second MPP for power source 109-2, controller 106 may determine a different grouping of power generators 110-1 through 110-5 into power sources. Controller 106 may determine the different grouping randomly. Controller 106 may determine the different grouping in a round robin manner where controller 106 changes the grouping of each power generator, of power generators 110-1 through 110-5 in turn. At least one power generator of power generators 110-1 through 110-5 may be an alternating power generator, which may change the grouping thereof.

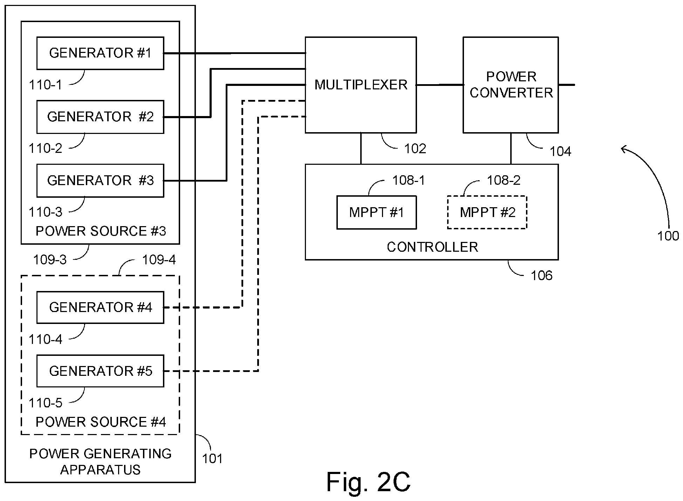

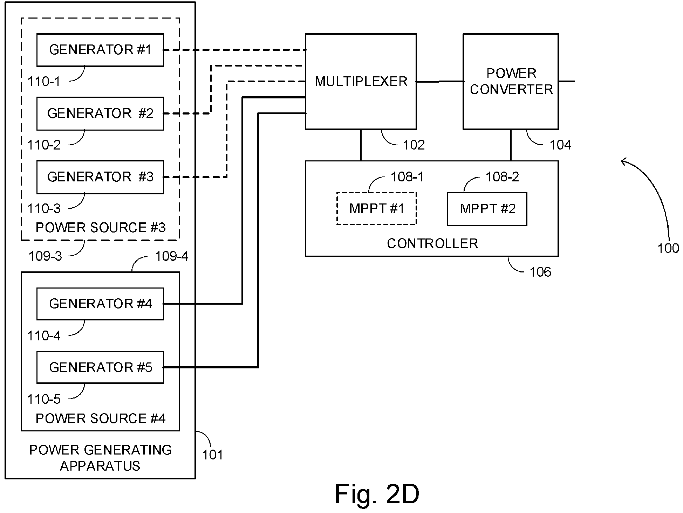

Figures 2C and 2D show an example where controller 106 determines new groupings for power generators 110-1 through 110-5. Controller 106 may group power generators 110-1, 110-2 and 110-3 to define a third power source 109-3, and grouped power generators 110-4 and 110-5 to define a fourth power source 109-4. Figures 2A-2D shows an example where power generator 110-3 is an alternating power generator which changed the grouping thereof. Figure 2C shows an example where controller 106 may control multiplexer 102 to connect power generators 110-1 through 110-3 of power source 109-3 to power converter 104. Controller 106 may determine, using first MPPT module 108-1, a third MPP, P3, of power source 109-3. Figure 2D shows an example where controller 106 may control multiplexer 102 to connect power generators 110-4 and 110-5 of power source 109-4 to power converter 104. Controller 106 determine may determine, using second MPPT module 108-2, a fourth MPP, P4, of power source 109-4. Controller 106 may determine a second combined power produced by the third power source 109-3 and fourth power source 109-4 (e.g., by summing the corresponding MPPs, P3 + P4).

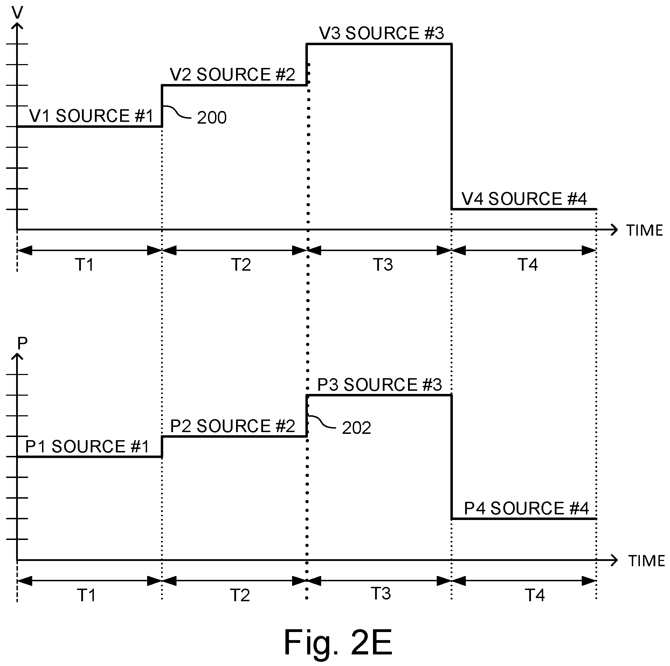

Based on the first combined power (P1+P2), and the second combined power (P3+P4), controller 106 may determine a grouping that may produce a highest combined power, and control multiplexer 102 may alternately connect corresponding power sources to power converter 104. Figure 2E shows a voltage versus time graph 200 of the voltage levels generated by power sources 109-1, 109-2, 109-3, and 109-4. Figure 2E also shows a power versus time graph 202 of the power levels generated by power sources 109-1, 109-2, 109-3, and 109-4. In Figure 2E, the combined power produced by first power source 109-1 and second power source 109-2 is 11. The combined power produced by third power source 109-3 and fourth power source 109-4 is 10. Therefore, controller 106 may proceed to control multiplexer 102 to alternately connect power sources 109-1 and 109-1 to power converter 104, and control power converter to alternately convert power from power sources 109-1 and 109-2 at the corresponding MPPs.

It is noted that prior to re-grouping power generators 110-1 through 110-5, controller 106 may control multiplexer 102 and power converter to equalize a voltage level of a pertinent power generator, with other power generators with which it will be grouped (e.g., to reduce peak current levels). For example, with reference to Figures 2A and 2B, power generator 110-3 may group power generators 110-4 and 110-5. Figures 2C and 2D show an example where power generator 110-3 may be grouped with power generators 110-1 and 110-2. Prior to controlling multiplexer 102 to connect power generator 110-1 through 110-3 to power converter 104, controller 106 may control multiplexer 102 to connect power generator 110-3 to power converter 104, and control power converter 104 to equalize the voltage level generated by power generator 110-3, with the voltage level generated by power source 109-1.

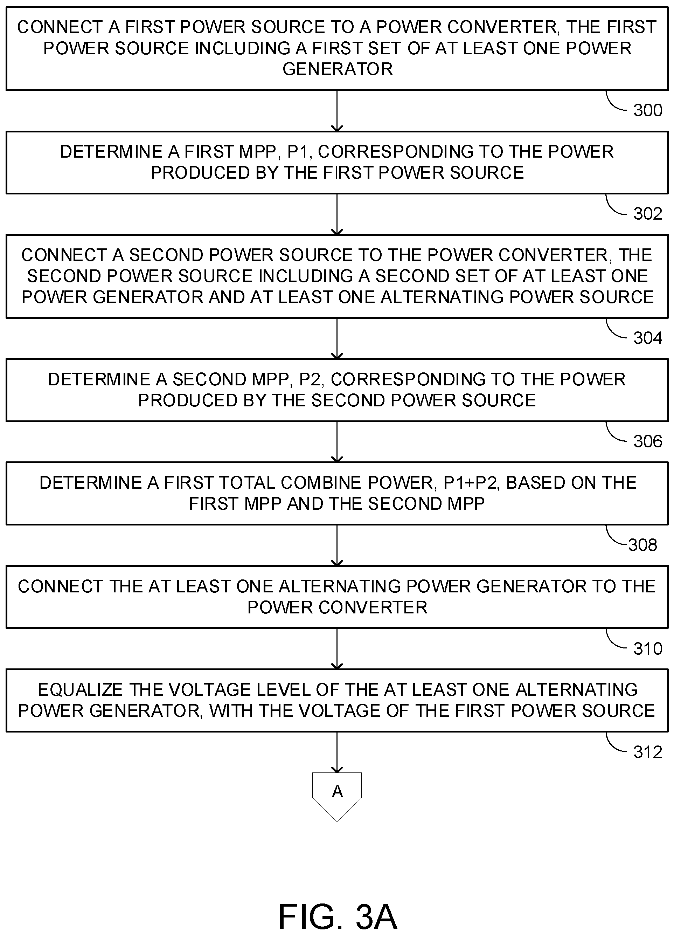

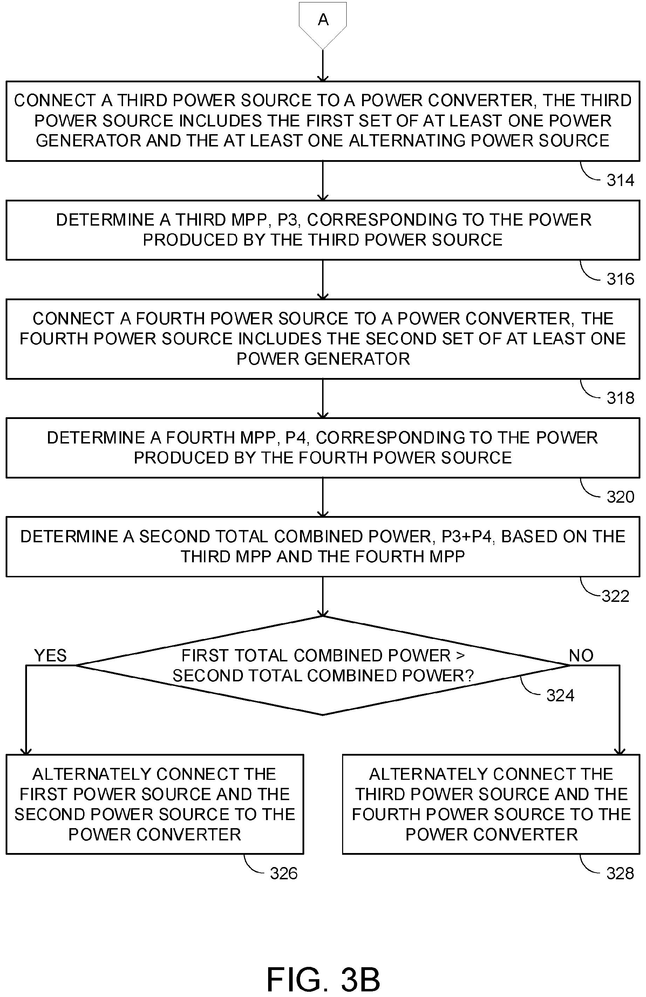

Figures 3A and 3B show an example method for optimizing power production from a power generating apparatus (e.g., a power generating apparatus 101 as described herein in Figure 1A). In step 300, a multiplexer 102 may connect a first power source (e.g., power source 109-1 as described herein in Figure 2A) to a power converter (e.g., power converter 104). The first power source may include a first set of at least one power generator (e.g., power generators 110-1 and 110-2).

In step 302, a controller 106 may determine a first MPP, P1, corresponding to the power produced by the first power source. For example, controller 106 may use an MPP algorithm (e.g., perturb and observe or incremental conductance).

In step 304, multiplexer 102 may connect a second power source (e.g., power source 109-2 as described herein in Figure 2B) to a power converter (e.g., power converter 104). The second power source may include a second set of at least one power generator and at least one alternating power generator. As described herein in Figures 2A-2E, for example, second power source 109-2 may include power generators 110-3-110-4, where power generators 110-4 and 110-5 may be the second set of at least one power generator, and power generator 110-3 may be an alternating power generator.

In step 306, controller 106 may determine, a second MPP, P2, corresponding to the power produced by the second power source.

In step 308, controller 106 may determine, a first total combine power, P1+P2, corresponding to the power produced by power sources 109-1 and 109-2. The controller 106 may determine, the first total combine power, for example, based on the first MPP and the second MPP.

In step 310, multiplexer 102 may connect the at least one alternating power generator to the power converter. As described herein in Figures 2C and 2D, for example, prior to controlling multiplexer 102 to connect power generator 110-1 through 110-3 to power converter 104, controller 106 may control multiplexer 102 to connect power generator 110-3 to power converter 104, and control power converter 104 to equalize the voltage level generated by power generator 110-3 with the voltage level generated by power source 109-1.

In step 312, controller 106 may control power converter 104 to equalize the voltage of the at least one alternating power generator, with the voltage of the second power source. As described herein in Figures 2C and 2D, for example, controller 106 may control power converter 104 to equalize the voltage level generated by power generator 110-3 with the voltage level generated by power source 109-1.

In step 314, multiplexer 102 may connect a third power source (e.g., power source 109-3 as described herein in Figures 2C) to a power converter (e.g., power converter 104). The third power source may include the second set of at least one power generator (e.g., power generators 110-1 and 110-2) and the alternating power generator (e.g., power generator 110-3).

In step 316, controller 106 may determine, a third MPP, P3, corresponding to the power produced by the third power source.

In step 318, multiplexer 102 may connect a fourth power source (e.g., power source 109-1 as described herein in Figure 2A) to a power converter (e.g., power converter 104). The fourth power source may include the second set of at least one power generator. As described herein in Figures 2A-2E, for example, fourth power source 109-3 may include power generators 110-4 and 110-5.

In step 320, the controller 106 may determine (e.g., using an MPPT algorithm), a fourth MPP, P4, corresponding to the power produced by the fourth power source.

In step 322, controller 106 may determine, a second total combine power, P3+P4, corresponding to the power produced by power sources 109-3 and 109-4. The controller 106 may determine, a second total combine power, for example, based on the third MPP and the fourth MPP.

In step 324, it may be determined if the first total combined power is larger than the second total combined power. If the first total combined power is larger than the second total combined power, the method may proceed to step 326. Alternatively, if the first total combined power is not larger than the second total combined power, the method may proceed to step 328.

In step 326, multiplexer 102 may alternately connect the first power source and the second power source to the power converter.

Alternatively, in step 328, multiplexer 102 may alternately connect the third power source and the fourth power source to the power converter.

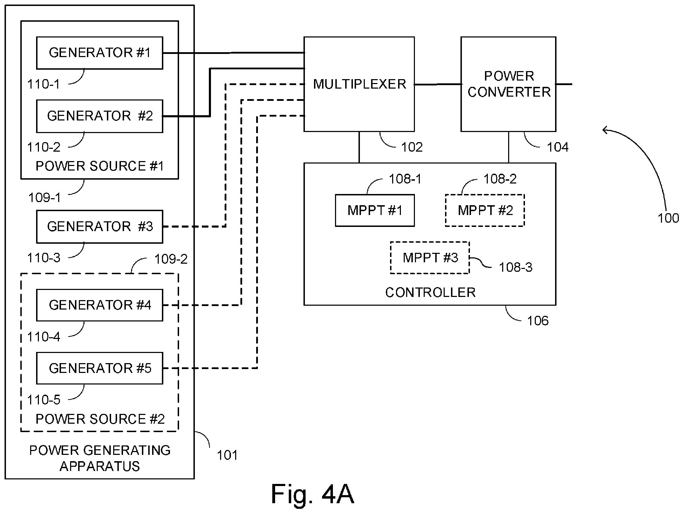

As described herein, controller 106 may determine a grouping of power generators to power sources based on MPP voltages corresponding to the sets of power generators, and the MPP of at least one alternating power generator. Controller 106 may group the at least one alternating power generator with a set of power generators with an MPP voltage that is within a determined threshold of the MPP voltage of the at least one alternating power generator. In case no such set exist, controller 106 may determine the at least one alternating power generator as a new power source. Figures 4A-4F show an example apparatus 100 comprising a power generating apparatus 101 that comprises five (5) power generators, 110-1 through 110-5, grouped into two power sources, power source 109-1 and power source 109-2. Power source 109-1 may comprise power sources 110-1 and 110-2 and power source 109-2 may comprise power sources 110-4 and 110-5. Power generator 110-3 may be an alternating power generator. As described herein in Figures 4A-4E, controller 106 may comprise three (3) MPPT modules, 108-1, 108-2, and 108-3. As described herein, in conjunction with Figure 1A, MPPT modules 108-1 through 108-3 may be implemented using a memory corresponding to each module, and at least one MPP tracker.

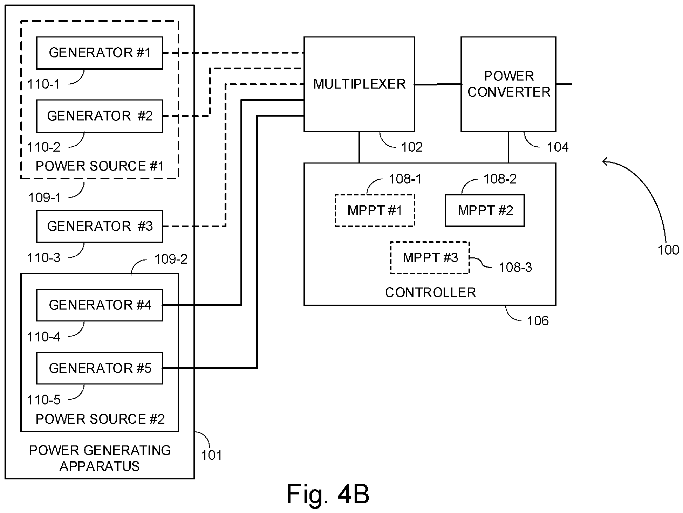

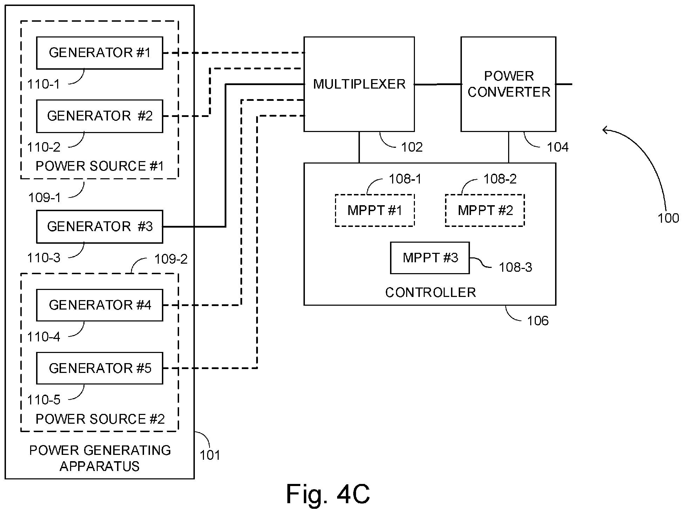

Figure 4A shows an example of controller 106 that may control multiplexer 102 to connect power source 109-1 to power converter 104, and may determine, using MPPT module 109-1, a first MPP, P1, and a corresponding first MPP voltage level, VMPP_1, corresponding to power source 109-1. Figure 4B shows an example of controller 106 that may control multiplexer 102 to connect power source 109-2 to power converter 104, and may determine, using MPPT module 109-2, a second MPP, P2, and a corresponding second MPP voltage level, VMPP_2, corresponding to power source 109-2. Figure 4C shows an example of controller 106 that may control multiplexer 102 to connect alternating power generator 110-3 to power converter 104, and may determine, using MPPT module 108-2, a third MPP, PA, and a corresponding third MPP voltage level, VMPP_A, corresponding to power generator 110-3.

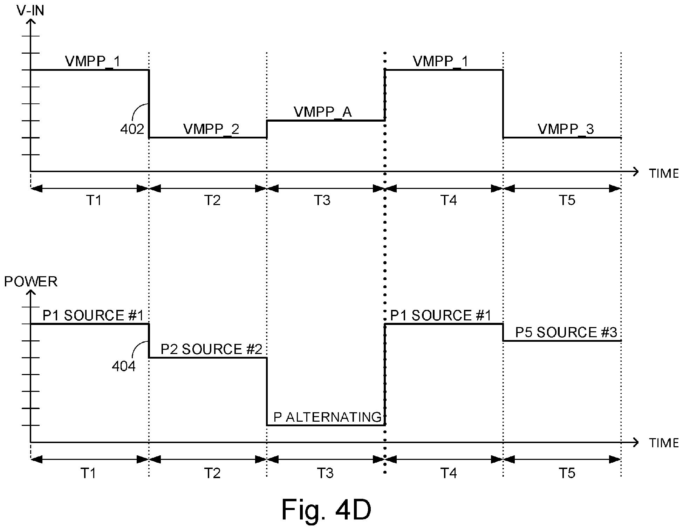

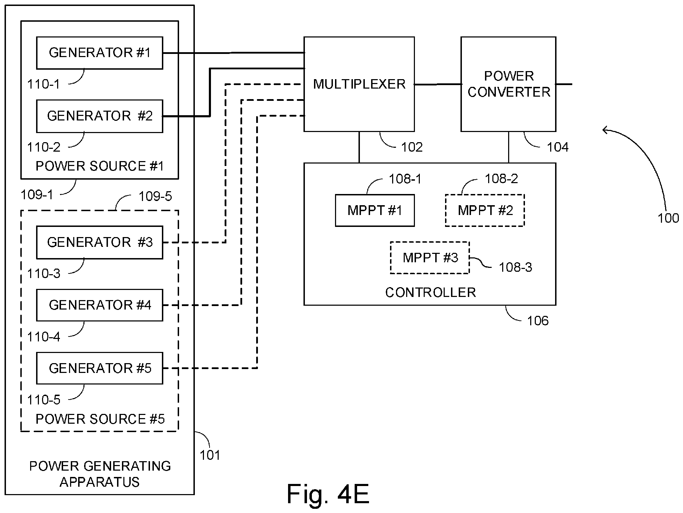

As described herein, controller 106 may determine a new grouping of power generators 110-1 through 110-5 based on the MPP voltages of power source 109-1, of power source 109-2, and of alternating power generator 110-3. Figures 4D shows an example of a voltage versus time graph 402 and a power versus time graph 404. As shown in Figure 4D, the difference between VMPP_A of the alternating powers source 110-3 and VMPP_2 of power source 109-2 may be smaller than the difference between VMPP_A and VMPP_1 of power source 109-1. Therefore, in cases in which the difference between VMPP_A and VMPP_2 may be below a threshold, power controller 106 may group power source generator 110-3 with power generators 110-4 and 110-5 to determine a new power source 109-5. In cases in which the difference between VMPP_A and VMPP_2 may be above a threshold, power controller 106 may determine generator 110-3 to be a new power source. In cases in which both voltage differences may be below the threshold, power controller 106 may group power source generator 110-3 with the power generators of the power source with the lowest voltage difference therebetween. As shown in Figure 4D, and with reference to Figure 4E, controller 106 may determine to group power generator 110-3 with power generators 110-4 and 110-5.

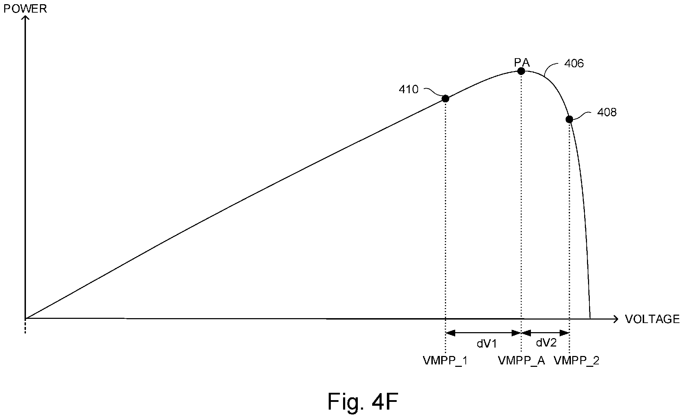

As described herein, and with reference to Figure 4F, in cases in which power generators 110-1 through 110-5 are photovoltaic power generators, power generators 110-1 through 110-5 may have a power versus voltage curve similar to power versus voltage curve 406. Figure 4F shows an example of a power versus voltage curve 406 (e.g., a PV-curve) representing the relationship between power and voltage for power generator 110-3 at given irradiance conditions. Also, as shown in Figure 4F, are VMMP_1 of power source 109-1 and VMPP_2 of power source 109-2. As shown in Figure 4F, although a difference, dV2, between VMMP_2 and VMMP_A may be smaller than a difference, dV1, between VMMP_1 and VMMP_A, power system controller 106 may group power generator 110-3 with power generators 110-1 and 110-2 of power source 109-1. For example, in cases in which power controller 106 may have information regarding PV-curve 406, controller 106 may determine to group power generator 110-3 with the set of power generators which may result in the lowest reduction of power. Additionally, or alternatively (e.g., if power controller 106 has no information regarding PV-curve 406), power system controller may determine to group power generator 110-3 with the set of power generators of the power source with a voltage level lower than VMPP_A. The reason for this may be the sensitivity of the power produced by power generator 110-3 to changes in voltage. For example, as shown in Figure 4F, point 408 on PV-curve 406 may relate to the power produced by power generator 110-3 at VMPP_2, and point 410 on PV-curve 406 may relate to the power produced by power generator 110-3 at VMPP_A. As shown in Figure 4F, the slope of PV-curve 406 at point 408 is higher than the slope of PV-curve at point 410. Therefore, the power produced by power generator 110-3 may be more sensitive to changes in the VMPP of power source 109-2 (point 408). Therefore, power system controller may determine to group power generator 110-3 with power generators 110-1 and 110-2 of power source 109-1.

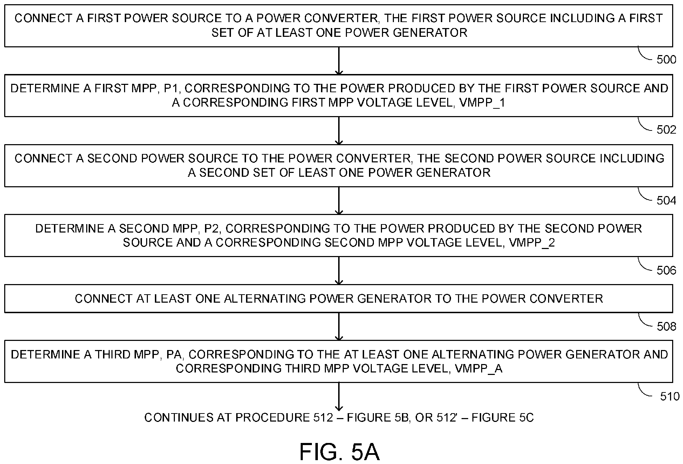

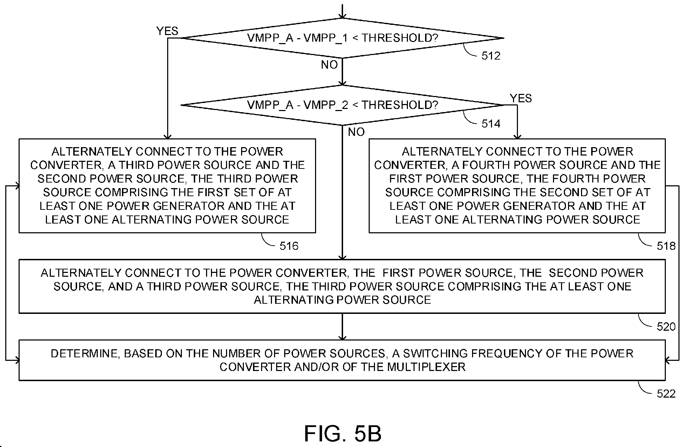

Figures 5A and 5B shows a method for optimizing power production from a power generating apparatus. In step 500, a multiplexer 102 may connect, a first power source (e.g., power source 109-1 as described herein in Figure 4A) to a power converter (e.g., power converter 104). The first power source includes a first set of at least one power generator (e.g., power generators 110-1 and 110-2 as described herein in Figure 4A).

In step 502, controller 106 may determine a first MPP, P1, corresponding to the power produced by the first power source and a corresponding first MPP voltage level, VMPP_1.

In step 504, multiplexer 102, may connect a second power source (e.g., power source 109-2 as described herein in Figure 4B) to the power converter. The second power source may include a second set of at least one power generator (e.g., power generators 110-4 and 110-5 as described herein in Figure 4A).

In step 506, controller 106 may determine a second MPP, P2, corresponding to the power produced by the first power source and a corresponding second MPP voltage level, VMPP_2.

In step 508, multiplexer 102 may connect at least one alternating power generator (e.g., power generator 110-3 as described herein in Figure 4C) to the power converter.

In step 510, controller 106 may determine a third MPP, PA, corresponding to the power produced by the at least one alternating power generator and a corresponding third MPP voltage level, VMPP_A.

In step 512, controller 106 may determine if the difference between VMPP_A and VMPP_1 is below a threshold. If the difference between VMPP_A and VMPP_1 is below a threshold, the method may proceed to step 516. Alternatively, if the difference between VMPP_A and VMPP_1 is above the threshold, the method may proceed to step 514.

In step 514, controller 106 may determine if the difference between VMPP_A and VMPP_2 is below a threshold. If the difference between VMPP_A and VMPP_2 is below a threshold, the method proceeds to step 518. If the difference between VMPP_A and VMPP_2 is above the threshold, the method proceeds to procedure 520.

In step 516, multiplexer 102 may alternately connect to the power converter 104, a third power source and the second power source, the third power source may comprise the first set of at least one power generator and the at least one alternating power generator. For example, as shown in Figures 4A-4C, the third power source may comprise power generators 110-1, 110-2, and 110-3.

In step 518, multiplexer 102 may alternately connect to the power converter 104, a fourth power source and the first power source, the fourth power source may comprise the second set of at least one power generator and the at least one alternating power generator. For example, as shown in Figures 4A-4C, the fourth power source may comprise power generators 110-3, 110-4, and 110-5.

In step 518, multiplexer 102 may alternately connect to the power converter 104, the first power source (e.g., power source 109-1 as described herein in Figure 4A), the second power source (e.g., power source 109-2 as described herein in Figure 4B), and a third power source, the third power source comprising the at least one alternating power generator (e.g., power generator 110-3).

In step 522, controller 106 may determine, based on the number of power sources, a switching frequency of the power converter and/or of the multiplexer. The switching frequency of the multiplexer may determine the time interval during which a power source may not be connected to power converter 104. This time interval may affect the ripple of the current drawn from the power source. Thus, for example, for a given switching frequency, this time interval may increase as the number of power sources increases. However, increasing the switching frequency of the power converter 104 may reduce this ripple current. Thus, the switching frequency of the power converter and/or of the multiplexer may be determined, for example, to control the ripple current from the power sources. It is also noted that, in general, each power source may be connected to the power converter for a corresponding time interval.

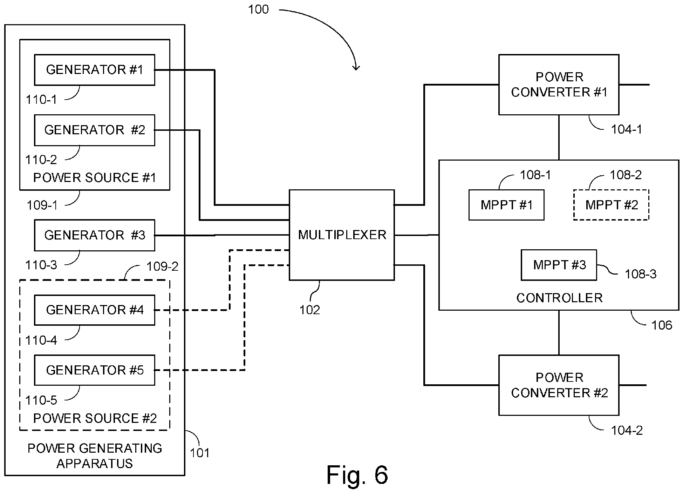

The method described herein in Figure 5, and in conjunction with Figures 1A, 2A-2D, 4A-4C and 4E, system 100 is shown to include a single power converter. However, system 100 may include more than one power converter. Figure 6 shows an example system 100 comprising two power converters, power converter 104-1 and power converter 104-2, connected to multiplexer 102. Controller 106 may control multiplexer 102 to connect, concurrently, a power source to power converter 104-1 and a power source to power converter 104-2. As shown in Figure 6, for example, multiplexer 102 may connect power source 109-1 to power converter 104-1, and power generator 110-3 to power converter 104-2. To enable concurrent connection, multiplexer 102 may comprise single pole double throw switches. Power converter 104-1 may be configured to convert relatively high power (e.g., relative to the rating of power generating apparatus 101), and power converter 104-2 may be configured to convert relatively low power. For example, in cases in which a power generating apparatus 101 is a photovoltaic panel, rated at hundreds of Watts (e.g., 300 Watts, 400 Watts, 500 Watts, or higher), power converter 104-1 may be configured to convert power on the order of hundreds of Watts and power converter 104-2 may be configured to convert power on the order of tens of Watts. Thus, controller 106 may control multiplexer 102 to connect power generators producing relatively high power to power converter 104-1, and control multiplexer 102 to connect power generators producing relatively low power to power converter 104-2.

Figure 7 shows an example of an apparatus, where the power generators are photovoltaic cells. Specifically, Figure 7 shows an example of a power generating apparatus 101 that may be a photovoltaic panel, where power generators 110-1 through 110-N may be one or more photovoltaic cells, or substrings of photovoltaic cells, such as photovoltaic cell 600. Multiplexer 102 may comprise a plurality of switches 102-1 through 102-N. Apparatus 100 may include a plurality of capacitors 602-1 through 602-N, where each may correspond to a substring of substrings 110-1 through 110-N. Each substring of substrings 110-1 through 110-N and corresponding capacitor 602-1 through 602-N may be coupled to a corresponding terminal of terminals 604-1 through 604-N, and to a terminal 606. Each one of switches 1102-1 through 102-N may be coupled between a corresponding terminal 604-1 through 604-N, and a first terminal (e.g., positive input terminal) 608-1 of power converter 104. Terminal 606 may be coupled to a second terminal (e.g., negative input terminal) 608-2 of power converter 104. Controller 106 may control multiplexer 102 and power converter 104 to determine one or more power sources which comprise corresponding groupings (e.g., a set or sets) of power generators (substrings in Figure 6) 110-1 through 110-N, and draw power from these power sources, as described herein and in conjunction with Figures 1A-1C, 2A-2E, 3A-3B, 4A-4F, and 5A-5B. Figure 7, for example, shows that all the substrings in the photovoltaic panel may be grouped into one or more groups to determine one or more power sources.

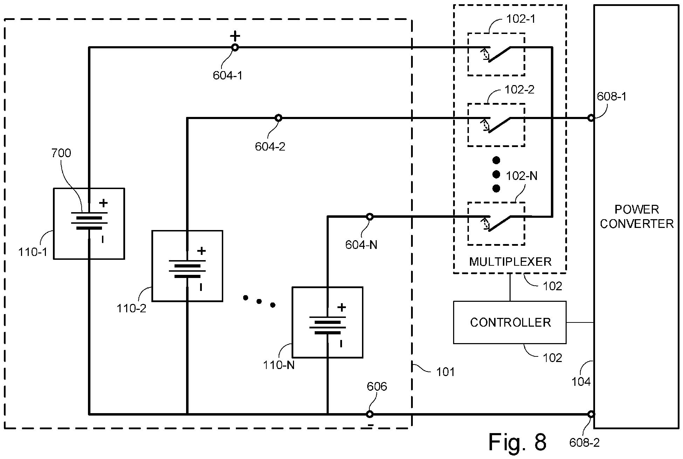

Figure 8 shows an example of an apparatus, where the power generators are battery packs. Specifically, Figure 8 shows an example power generating apparatus 101 that may be a battery, and power generators 110-1 through 110-N that may be battery packs comprising one or more battery cells (e.g., battery cell 700). Figure 7, capacitors 602-1 through 602-N (e.g., as described herein in Figure 7) may be optional. Similar to as described above in conjunction with Figure 6, each battery pack of battery packs 110-1 through 110-N may be coupled to a corresponding terminal of terminals 604-1 through 604-N, and to a terminal 606. Each one of switches 1102-1 through 102-N may be coupled between a corresponding terminal 604-1 through 604-N, and a first terminal 608-1 of power converter 104. Terminal 606 may be coupled to a second terminal (e.g., negative input terminal) 608-2 of power converter 104. Controller 106 may control multiplexer 102 and power converter 104 to determine one or more power sources which comprise corresponding groupings (e.g., a set or sets) of power generators (e.g., battery packs as described herein in Figure 8) 110-1 through 110-N, and draw power from these power sources, as described herein and in conjunction with Figures 1A-1C, 2A-2E, 3A-3B, 4A-4F, and 5A-5B. In Figure 7, for example, all the battery packs in the battery may be grouped into one or more groups to determine one or more power sources.

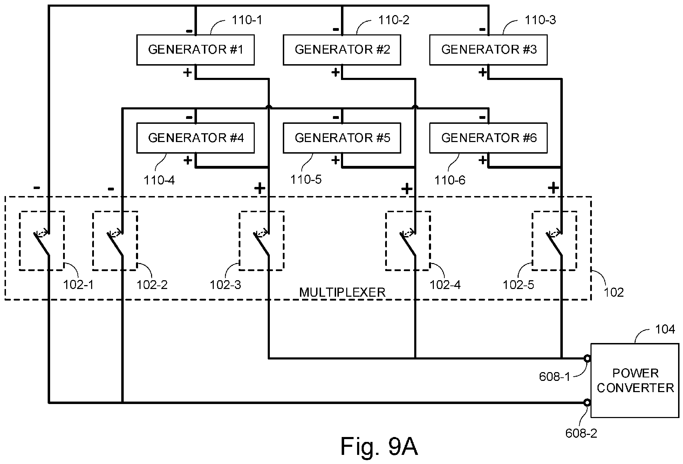

As shown in Figures 7 and 8, multiplexer 102 may include a corresponding switch 102-1 through 102-N for each of power generators 110-1 through 110-N. As described herein, other switch configurations may be used in multiplexer 102. Figures 9A-9C show an example of a multiplexer 102 which may be used in an apparatus 100. Specifically, Figures 9A-9C shown an example of six (6) power generators 110-1 through 110-6, where multiplexer 102 includes five (5) switches 102-1 through 102-5. As shown in Figures 9A-9C, for example, switch 102-1 may be connected between the negative terminals of power generators 110-1 through 110-3, and second terminal 608-2 of power converter 104. Switch 102-2 may be connected between the negative terminals of power generators 110-4 through 110-6, and second terminal 608-2 of power converter 104. Switch 102-3 may be connected between the positive terminals of power generators 110-1 and 110-4, and first terminal 608-1 of power converter 104. Switch 102-4 may be connected between the positive terminals of power generators 110-2 and 110-5, and first terminal 608-1 of power converter 104. Switch 102-5 may be connected between the positive terminals of power generators 110-3 and 110-6, and first terminal 608-1 0f power converter 104.

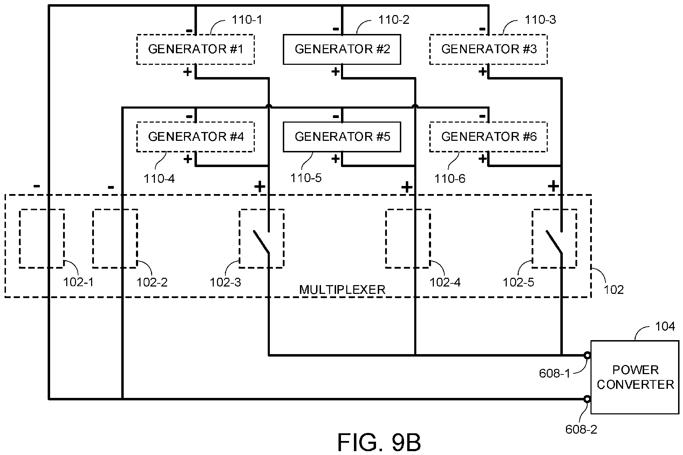

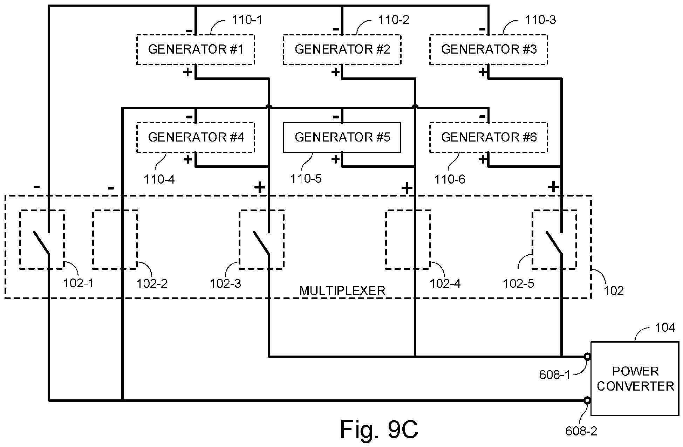

Switch configurations of multiplexer 102, for example, shown in Figures 9A-9C, may have a tradeoff between a number of switches and possible groupings of power generators 110-1 through 110-6. As shown in Figure 9A, for example, switch 102-1 through 102-5 may be in a non-conducting state. Accordingly, neither one of power generators 110-1 through 110-6 may be connected to power converter 104. With reference to Figure 9B, switch 102-1, switch 102-2, and switch 102-4 may be in a conducting state while switches 102-3 and 102-5 may be in a non-conducting state. Accordingly, power generators 110-2 and 110-5 may be connected to power converter 104. As shown in Figure 9C, for example, switch 102-2 and switch 102-4 may be in a conducting state and switches 102-1, 102-3, and 102-5 may be in a non-conducting state. Accordingly, only power generator 110-5 may be connected to power converter 104.

Referring to Figures 9A-9C, power generators may be considered as if arranged in J rows and I columns, where the number of power generators 110-1 through 110-N may be J*I, where J and I are integers equal or greater than one (1). Thus, as shown in Figures 9A-9C, for example, power generators 110-1 through 110-6 may be arranged in two (2) rows and three (3) columns, where power generators 110-1 through 110-3 define a first row and power generators 110-4 through 110-6 define a second row. Power generators 110-1 and 110-4 may define a first column, power generators 110-2 and 110-5 may define a second column, and power generators 110-3 and 110-6 may define a third column. In the switch configurations of multiplexer 102 as shown in Figures 9A-9C, individual power generators, power generators from the same row, or power generators from the same column, or all power the power generators may be connected to the power converter 104, and thus define a power source. Power generators having a non-common row and column number may not be grouped together. For example, power generator 110-1 (e.g., row 1, column 1) and power generator 110-5 (row 2, column 2) may not be grouped together. Similarly, power generator 110-3 (e.g., row 1, column 3) and power generator 110-4 (row 2, column 1) may not be grouped together.

Multiplexer 102, power converter 104 and controller 106 may be included in a power device that may be used for optimizing power production from a power generating apparatus. Figures 10A and 10B shows an example power device 900 used for optimizing power production from a power generating apparatus (e.g., power generating apparatus 101). Specifically, Figure 10A shows an example block diagram of a power device 900 as described herein. Power device 900 may comprise input terminals 604-1 through 604-N and terminal 606, which may connect power generators (e.g., power generators 110-1 through 110-N as described herein in Figure 1A) to multiplexer 102. Power device 900 may comprise terminals 916-1 and 916-2. Power device 900 may comprise a power device controller 901, and sensor(s) 902 connected to power device controller 901. Power device 900 may further comprise a power device communications interface 904, gate drivers 906, and an auxiliary power circuit 908, all connected to power device controller 901. Multiplexer 102 may be, for example, as described herein in Figures7, 8, and 9A-9C. Power converter 104 may a be a buck converter, a boost converter, an inverting buck-boost converter, a non-inverting buck-boost converter, a flyback converter, a SEPIC converter, a Cuk converter and the like.

Power device controller 901 may correspond to controller 106 (e.g., as described herein in Figures 1A-1C, 2A-2E, 3A-3B, 4A-4F, 5A-5B, and 6) and may be partially or fully implemented as one or more computing devices or may include one or more processors, such as an Application Specific Integrated Circuit (ASIC) controller, Field Programmable Gate Array (FPGA) controller, a microcontroller, or a multipurpose computer, to name a few nonlimiting examples. Power device controller 901 may comprise one or more processors 910, connected to memory 912 and Input/Output (I/O) ports 914. Memory 912 may store computer readable instructions as well as data (e.g., measurements from sensor(s) 902 or parameters). Processor 910 and memory 912 may be used to implement MPPT modules 108-1 through 108-M as described herein in Figure 1A. I/O ports 914 may be configured to connect modules (e.g., sensor(s) 902, communication interface 904, gate drivers 906 or other modules of power device 900) to processor 910. The one or more processors 910 may execute the instructions, which may result in the processor 910 performing one or more steps or functions as described herein that may be attributed to controller 106, power device controller 901, and/or processor 212. Power device controller 901 may control switches 101-1 through 106-N (e.g., via gate drivers 906) to connect a set of power generators, from power generators 110-1 through 110-N to power converter 104. Power device controller 901 may control power converter 104 to operate in a Continuous Current Mode (CCM) or Discontinuous Current Mode (DCM) with respect to the current drawn from each power source 109-1 through 109-M (e.g., as described herein in Figure 1A).

Sensor(s) 902 may comprise one or more voltage sensors (e.g., implemented by employing a resistive or capacitive divider, a resistive or capacitive bridge, or comparators), one or more current sensors (e.g., implemented by employing a Current Transformer (CT) sensor, a Hall Effect sensor, or a zero flux sensor, current sense resistors, and the like), one or more temperature sensors, one or more power sensors, and/or one or more frequency sensors. Sensor(s) 902 be placed in various positions, to measure (e.g., within a measurement error) electrical parameters (e.g., voltage, current, power, etc.) relating to power converter 104, and/or power generators 110-1 through 110-N. For example, voltage sensor or voltage sensors may be placed between, one or more of terminals 604-1 through 604-N, and terminal 606. A voltage sensor may be placed between terminals 916-1 and terminal 916-2. For example, a current sensor may be placed between one or more of input terminals 606-1-604-N, and the corresponding one of switches 1102-1 through 102-N, for measuring the current from or to a corresponding one or more of power generators 110-1 through 110-N. A current sensor may be placed for measuring a current through terminal 916-1 and/or 916-2.

Communications interface 904 may include one or more of a receiver, a transmitter, or a transceiver, and may be configured to communicate, based on a communications protocol, signals with one or more other transmitters, receivers, or transceivers, via a medium. The communication protocol may define one or more characteristics of the signals and/or of communications using signals, such as a transmission frequency or frequencies, a modulation scheme (e.g., Amplitude shift keying - ASK, Frequency shift keying - FSK, Quadrature Phase Shift Keying - QPSK, Quadrature Amplitude Modulation - QAM, ON OFF keying - OOK), multiple access scheme (e.g., Time Division Multiple Access - TDMA, Frequency Division Multiple Access - FDMA, Code Division Multiple Access - CDMA, Carrier Sense Multiple Access - CSMA, Aloha), encoding/decoding schemes (e.g., Non Return to Zero - NRZ, Manchester coding, Block coding), or any other characteristic. The medium may be a wired or a wireless medium. For example, a wired medium may be a dedicated communications cable (e.g., twisted pair, coaxial cable) or power lines connecting power device 120 to a load or other power devices.

Auxiliary power circuit 908 may provide power for the operation of power device from one or more of terminals 604-1 through 604-N, and terminal 606. Auxiliary power circuit 210 may provide power for the operation of power device from terminals 916 and 916-2.

According to the disclosure herein, and as shown in Figure 10B, multiplexer 102 and power converter 104 may be combined in a MISO resonant converter 1100. MISO resonant converter 1100 may be used in a power device 900. MISO resonant converter 1100 is further explained herein.

Resonant converters may be used as direct current (DC) to DC converters or as DC to alternating current (AC) converters. Resonant converters may have various advantages. For example, resonant converters may have the advantage that switches of the resonant converter are more easily controller (e.g., relative to a non-resonant converter) to switch (e.g., transition) between states (e.g., between a conducting state and a non-conducting state, or vice versa) under soft switching conditions (e.g., zero voltage switching, zero current switching, or both). Switching under soft switching conditions have an advantage of reducing switching losses of the resonant converter, for example, relative to hard switching. The reduced switching losses may result in using components with lower ratings, reduced electromagnetic interference (EMI), and/or higher efficiency. In a resonant converter, power conversion is controlled by altering the switching frequency of the switches of the resonant converter.

The disclosure herein describes a multiple input single output (MISO) resonant converter and methods for such a MISO resonant converter. MISO converters may be used to combine power from various sources to a single output. A MISO resonant converter, according to the disclosure herein, may combine power from various sources while having the advantages of a resonant converter. For example, a MISO resonant converter, according to the disclosure herein, may combine power sources such that each power source operates at a maximum power point (MPP) of the power source. For example, a MISO resonant converter, according to the disclosure herein, may combine power sources such that an output voltage of the MISO resonant converter is maintained at a determined level. A MISO resonant converter, according to the disclosure herein, may combine power from various power sources by generating a sequence of waveforms during a sequence of separate time-periods, where each time-period of the sequence of separate time-periods may correspond to an associated power source.

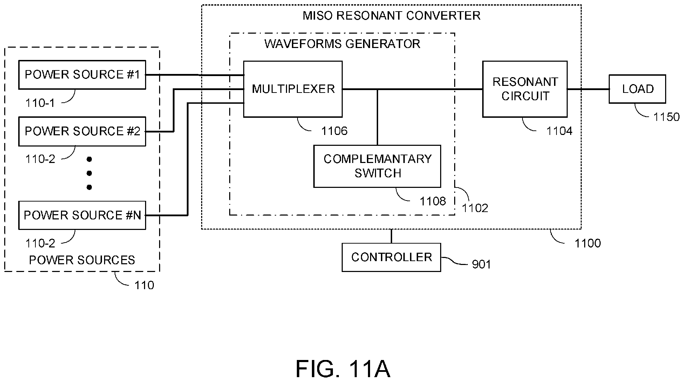

Figures 11A-11F show examples of a MISO resonant converter 1100, according to the disclosure herein. Figure 11A shows an example MISO resonant converter 1100 that may comprise a waveforms generator 1102 and a resonant circuit 1104. Waveforms generator 1102 may include a multiplexer 1106 and a complementary switch 1108. Multiplexer 1106 may be similar to multiplexer 102 described hereinabove (e.g., in conjunction with Figures 1A, 2B-2E, 4A-4C, 6, 7, 8, 9A-9C, 10A). Multiplexer 1106 may be coupled to resonant circuit 1104 and to complementary switch 1108. Multiplexer 1106 may further be coupled to a plurality of power sources 110 which may comprise power sources 110-1, 110-2, ..., 110-N. Plurality of power sources 110 may be photovoltaic power sources such as photovoltaic modules, photovoltaic substrings, and/or photovoltaic cells. Plurality of power sources 110 may be a plurality of battery cells, or a plurality of battery banks in a battery. A load 1150 may be coupled to resonant circuit 1104 (e.g., either directly, via a transformer, via a rectifier, or via a transformer and a rectifier, as may further be elaborated below in Figures 1B-1F).

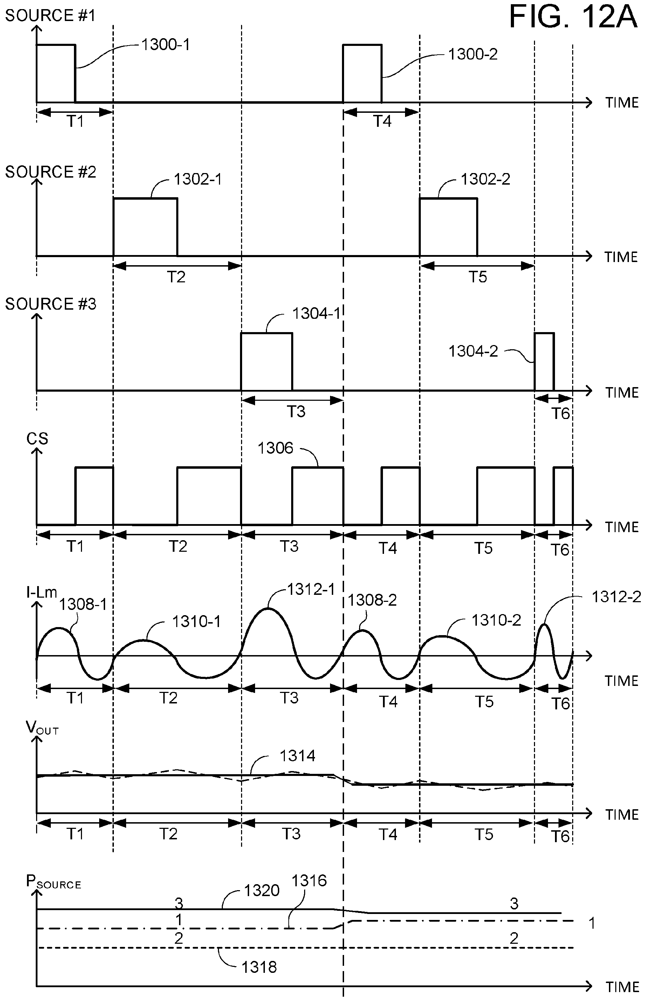

As further elaborated below in conjunction with Figures 12A-12C, 13, 14, 15A and 15B, 22A1-22D3, 23, and 24, a controller (e.g., power device controller 901) may determine, based on one or more electrical parameters (e.g., power from one or more of power sources 110 and/or output voltage from MISO resonant converter 1100), a sequence of separate time-periods, wherein each time-period of the sequence of separate time-periods may correspond to an associated power source of the plurality of power sources 110. Power device controller 901 may control multiplexer 1106 and complementary switch 1108, to separately connect and disconnect each of power source 110 to resonant circuit 1104, during the sequence of separate time-periods, to generate a corresponding sequence of waveforms, where each waveform of the corresponding sequence of waveforms may correspond to one of power sources 110-1, 110-2, ..., 110-N.

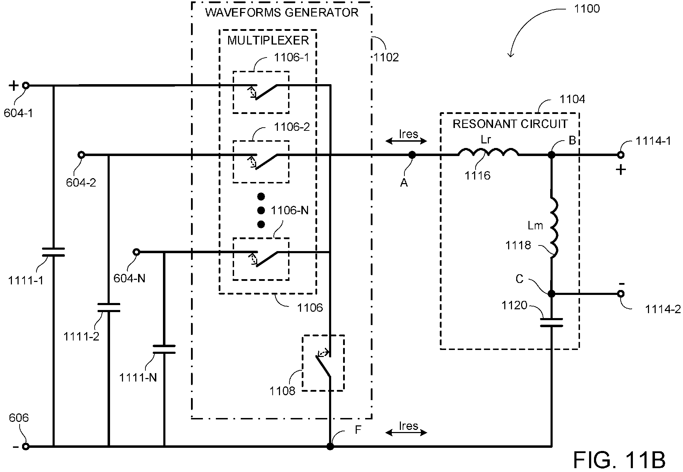

Figures 11B-11F show examples of a MISO resonant converter 1100. As shown in Figures 1B-1F, multiplexer 1106 may comprise a plurality of switches 1106-1, 1106-2, ..., 1106-N. Each of switches 1106-1, 1106-2, ..., 1106-N may be connected between a connection point A, and a corresponding terminal of terminals 604-1, 604-2, ..., 604-N. Complementary switch 1108 may be coupled between connection point A and connection point F. Resonant circuit 1104 may be connected between connection point A and connection point F. Connection point F may be coupled to terminal 606. As shown in Figures 1B-1F, resonant circuit 1104 may be an inductor-inductor-capacitor (LLC) resonant circuit. LLC resonant circuit 1104 includes a resonant inductor (Lr) 1116, a magnetization inductor (Lm) 1118 and a capacitor 1120 connected in series. Resonant inductor 1116 is connected between connection point A and connection point B. Magnetization inductor 1118 is connected between connection point B and connection point C. Capacitor 1120 is connected between connection point C and connection point F. MISO resonant converter 1100 may optionally include input capacitors 1111-1, 1111-2, ..., 1111-N, (e.g., in cases in which power sources 110-1, 110-2, ..., 11-N are non-constant DC voltage power source such as photovoltaic power sources), each connected between a corresponding one of terminals 604-1, 604-2, ..., 604-N and terminal 606. Each one of terminals 604-1, 604-2, ..., 604-N may be coupled to corresponding one of power sources 110-1, 110-2, ..., 110-N.

As described herein, controller 901 may control switches 1106-1, 1106-2, ..., 1106-N to alternately connect and disconnect a corresponding one of power sources 110-1, 110-2, ..., 110-N to the resonant circuit. Controller 901 may further control complementary switch 1108 in a complementary manner to switches 1106-1, 1106-2, ..., 1106-N. For example, when one of switches 1106-1, 1106-2, ..., 1106-N is in a conducting state, complementary switch 108 is in a non-conducting state. When one of switches 1106-1, 1106-2, ..., 1106-N is in a non-conducting state, complementary switch 1108 is in a conducting state. A connection event of a power source (e.g., 110-i), may be defined, over a corresponding time-period, as the transition of the corresponding switch (e.g., 1106-i) to a conducting state, followed, after a period of time, by the transition of the corresponding switch (e.g., 1106-i) to a non-conducting state, and the transition of the complementary switch to a conducting state. Controlling switches 1106-1, 1106-2, ..., 1106-N and complementary switch 1108 may generate a sequence of connection events, which may generate a sequence of waveforms during a sequence of separate time-periods, where each waveform in the sequence of waveforms may correspond to an associated power source of power sources 110-1, 110-2, ..., 110-N. The sequence of connection events and corresponding separate time-periods may define a multiplexing cycle.

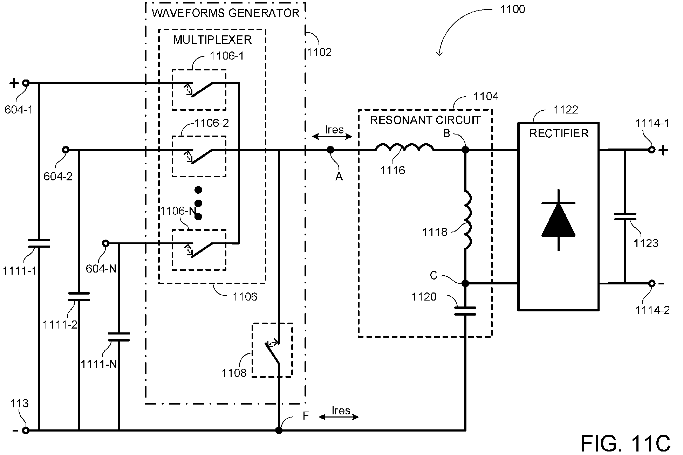

Figure 11B shows an example of an output terminal 1114-1 connected to connection point B and output terminal 1114-2 connected to connection point C (e.g., output terminals 1114-1 and 1114-2 may be connected across magnetization inductor 1118), and MISO resonant converter 1100 may operate as a DC-to-AC converter. Figure 11C shows an example of a rectifier 1122 being coupled between connection point B and connection point C (e.g., in parallel with magnetization inductor 118). Rectifier 1122 may be coupled to output terminals 1114-1 and 1114-2. An output capacitor 1123 may be coupled between output terminal 1114-1 and output terminal 1114-2 (e.g., in parallel with rectifier 1122). MISO resonant converter 100, in Figure 11C, may also operate as a DC-to-DC converter.

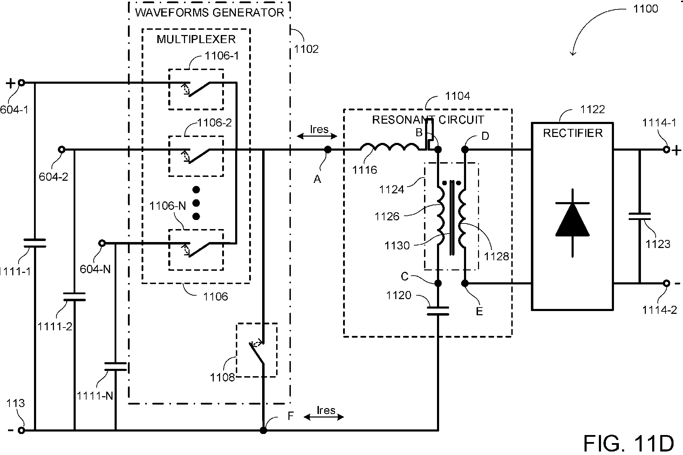

Figure 11D shows an example MISO resonant converter 1100 comprising a transformer 1124. Transformer 1124 may comprise a primary windings 1126 and a secondary windings 1128, wound around a core 1130. Primary windings 1126 may be coupled between connection point B and connection point C. Secondary windings 1128 may be coupled between connection point D and connection point E. Each of primary windings 1126 and secondary windings 1128 may have a corresponding number of turns determined by a turns-ratio of transformer 1124. Primary windings 1126 may function as the magnetization inductance of resonant circuit 1104. As shown in Figure 11D, a rectifier 1122 may be coupled between connection point D and connection point E (e.g., in parallel with secondary windings128). Rectifier 1122 may be coupled to output terminals 1114-1 and 1114-2. Output capacitor 123 may be coupled between output terminal 1114-1 and output terminal 1114-2 (e.g., in parallel with rectifier 1122). In Figure 11D, MISO resonant converter 1100 may operate as a DC-to-DC converter. Transformer 1124 may provide isolation between terminals 604-1, 604-2, ..., 604-N and 606, and terminals 1114-1 and 1114-2.

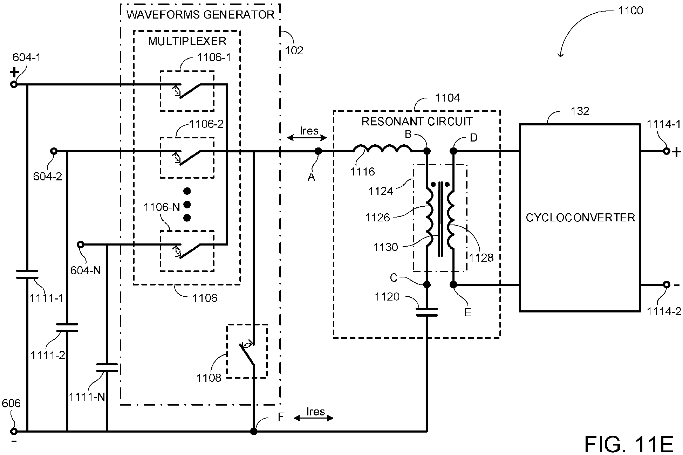

Figure 11E shows an example MISO resonant converter 1100, operating as a DC-to-AC or an AC-to-AC converter. To that end, in Figure 11E, a cycloconverter 1132 may be used instead of rectifier 1132. Cycloconverter 1132 may convert the frequency of the waveform generated by waveforms generator 1102 and resonant circuit 1104. Thus, waveforms generator 1102 and resonant circuit 1104 may generate waveforms at a relatively high frequency (e.g., on the order of thousands of Hertz, on the order of tens of thousands of Hertz, on the order of hundreds of thousands of Hertz, or higher), and cycloconverter 1132 may reduce this frequency to a relatively low frequency (e.g., on the order of tens of Hertz). Thus, a transformer 1124 with a relatively smaller size may be used (e.g., relative to the size of a transformer in cases in which waveforms generator 1102 and resonant circuit 1104 generate waveforms at a relatively low frequency).

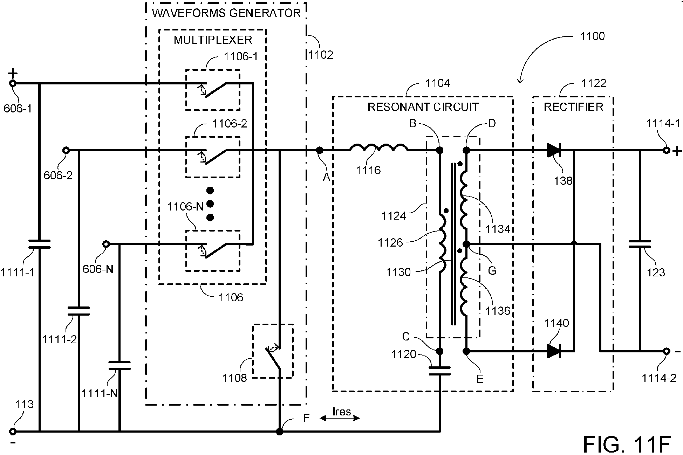

Figure 11F shows an example MISO resonant converter 1100, operating as a DC-to-DC converter, and examples of transformer 1124 and rectifier 1122. Transformer 1124 may comprise a primary windings 1126. Transformer 1124 may comprise a split secondary windings, which may comprise first secondary windings 1134 and second secondary windings 1136. Primary windings 1126, first secondary windings 1134, and second secondary windings 1136 may be wound around a core 1130. Primary windings 1126 may be coupled between connection point B and connection point C. First secondary windings 1134 may be coupled between connection point D and connection point G. Second secondary windings 1136 may be coupled between connection point G and connection point E. Rectifier 1122 may comprise a first diode 1138 and a second diode 1140. The cathodes of diodes 138 and 140 may be coupled to terminal 1114-1. The anode of first diode 1138 may be coupled to connection point D. The anode of second diode 1140 may be coupled to connection point E. Terminal 1114-2 may be coupled to connection point G, between first second windings 1134 and second secondary windings 1136.

Where a load is connected between terminals 1114-1 and 1114-2, a current flowing through primary windings 1126 from connection point B to connection point C, causes a current to flow only through first secondary windings 1134 from connection point G to connection point D, through diode 1138 to terminal 1114-1, through the load to terminal 1114-2, and back to connection point G. A current flowing through primary windings 1126 from connection point C to connection point B causes a current to flow only through second secondary windings 1136 from connection point G to connection point E, through diode 1140 to terminal 1114-1, through the load to terminal 1114-2, and back to connection point G. Thus, current flows between terminals 11141-1 and 1114-2 only in one direction (e.g., from terminal 1114-1 to terminal 1114-2). In Figure 1F, MISO resonant converter 1100 may operate as a DC-to-DC converter. Transformer 1124 may provide isolation between terminals 604-1, 604-2, ..., 604-N and 606, and terminals 1114-1 and 1114-2.

As mentioned above, in a resonant converter, power conversion is controlled by altering the switching frequency of the switches of the resonant converter. As described herein in Figure 10A and 10B, power device controller 901 may determine, based on one or more electrical parameters (e.g., power from one or more of plurality of power sources 110 and/or output voltage from MISO resonant converter 1100), a sequence of separate time-periods, wherein each time-period of the sequence of separate time-periods may correspond to an associated power source 110-1, 110-2, ..., 110-N of the plurality of power sources 110. Thus, MISO resonant converter 100 may convert power from each of power source 110-1, 110-2, ..., 110-N using a respective frequency, which may correspond to the time-period associated with each of power sources 110-1, 110-2, ..., 110-N. Power device controller 901 may control multiplexer 106 and complementary switch 108, during the sequence of separate time-periods, to generate a corresponding sequence of waveforms during the multiplexing cycle and based on the sequence of connection events and corresponding separate time-periods. Each waveform of the corresponding sequence of waveforms may correspond to one of power sources 110-1, 110-2, ..., 110-N.

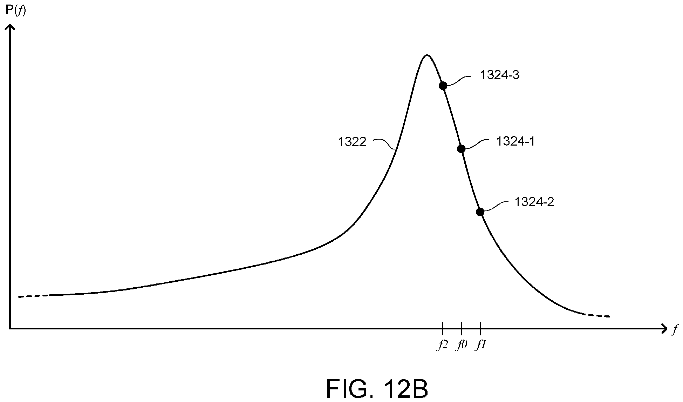

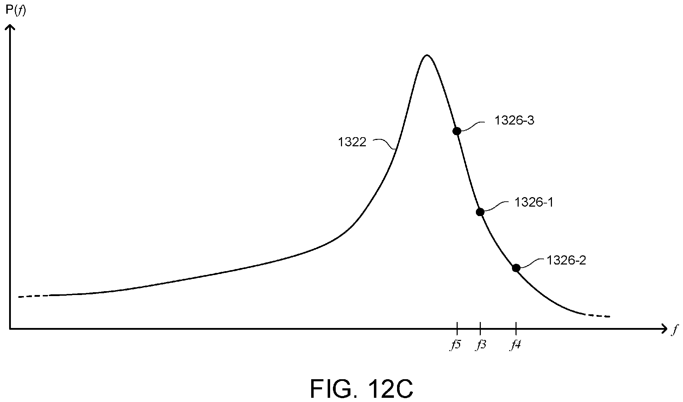

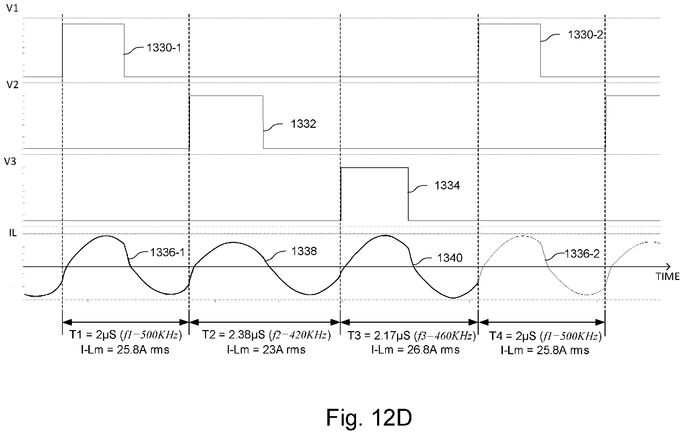

Figure 12A shows an example of waveforms relating to a MISO resonant converter 100. Specifically, Figure 3A shows an example MISO resonant converter 100 connected to 3 power sources (e.g., 110-1, 110-2, and 110-3 as described herein in Figure 1A), and a multiplexer 1106 that comprises 3 corresponding switches 1106-1, 1106-2, and 1106-3. Figure 12A shows two sequences, each of separate time-periods. The first sequence of separate time-periods includes time-periods T1, T2, and T3. The second sequence of separate time-periods includes time-periods T4, T5, and T6. Time periods T1 and T4 may be associated with power source 110-1. Time periods T2 and T5 may be associated with power source 110-2. Time periods T3 and T6 may be associated with power source 110-3. Time-periods T1, T2, and T3 define a multiplexing cycle. Time-periods T4, T5, and T6 define a subsequent multiplexing cycle. The duration of the multiplexing cycle and the subsequent multiplexing cycle need not be equal (e.g., T1+T2+T3 may be different from T4+T5+T6). In Figure 12A, signal 1300-1 may correspond to a control signal applied to switch 1106-1 in multiplexer 1106 during time-period T1, and signal 1300-2 may correspond to a control signal applied to switch 1106-1 in multiplexer 106 during time-period T4. Signal 1302-1 may correspond to a control signal applied to switch 1106-2 in multiplexer 1106 during time-period T2, and signal 1302-2 may correspond to a control signal applied to switch 1106-2 in multiplexer 1106 during time-period T5. Signal 1304-1 may correspond to a control signal applied to switch 1106-3 in multiplexer 1106 during time-period T3, and signal 1304-2 may correspond to a control signal applied to switch 1106-3 in multiplexer 1106 during time-period T6. Signal 1306 may correspond to the control signal applied to complementary switch 1108. In Figure 12, for example, the duty cycle may use control signals 1300-1, 1302-1, 1304-1, 1300-2, 1302-2, and 1304-2, during the corresponding time periods T1, T2, T3, T4, T5, and T6 is fifty percent (50%). For example, during a first half of time-period T1 switch 1106-1 may be in a conducting state and complementary switch 1108 may be in a non-conducting state, and during a second half of time-period T1 switch 1106-1 may be in a non-conducting state and complementary switch 1108 may be in a conducting state.

It may be shown that, the power gain associated with a power source of plurality of power sources 110, may be affected by the time-period previous to the time-period associated with the power source. For example, the power gain associated with power source 110-i, may be affected by the duration of time-period Ti-1. The power gain associated with power source 110-2, for example, may be affected by the duration of time-period T1. Figures 3B and 3C show examples of a power gain frequency response 1322 of the resonant circuit 104. Figure 12B shows three frequencies f0, f1, and f2. Frequencies f1 and f2 may correspond to T1 and T2, respectively. The power gain 324-1 may be associated with power source 110-1, and may be affected by time-period T0, associated with frequency f0 (1/T0). The power gain 1324-2 may be associated with power source 110-2, and may be affected by time-period T1, associated with frequency f1 (1/T1). The power gain 1324-3 may be associated with power source 110-3, and may be affected by time-period T2, associated with frequency f2 (1/T2). Figure 12C shows the three frequencies f3, f4, and f5. Frequencies f3, f4, and f5 may correspond to T3, T4, and T5. The power gain 1326-1 may be associated with power source 110-1, and may be affected by time-period T3, associated with frequency f3 (1/T3). The power gain 1326-2 may be associated with power source 110-2, and may be affected by time-period T4, associated with frequency f4 (1/T4). The power gain 1326-3 may be associated with power source 110-3, and may be affected by time-period T5, associated with frequency f5 (1/T5).

Still referring to the example of Figure 3A, by controlling switches 1106-1, 1106-2, and 1106-3, and complementary switch 1108 as described above, resonant circuit 1104 may generate a sequence of waveforms of the current, I-Lm, through magnetization inductor 1118, where each waveform of the corresponding sequence of waveforms may correspond to one of power sources 110-1, 110-2, and 110-3. In the example shown in Figure 12A, waveforms 1308-1, 1310-1, and 1312-1 may form a first sequence of waveforms of the current, I-Lm, through magnetization inductor 1118, during the first multiplexing cycle. Waveform 1308-1 may correspond to power source 110-1, waveform 1310-1 may correspond to power source 110-2, and waveform 1312-1 may correspond to power source 110-3. Waveforms 1308-2, 1310-2, and 1312-2 may form a second sequence of waveform of the current, I-Lm, through magnetization inductor 1118 during a subsequent, second multiplexing cycle. Waveform 1308-2 may correspond to power source 110-1, waveform 1310-2 may correspond to power source 110-2, and waveform 1312-2 may correspond to power source 110-3. Figure 3A, graph 1314, shows an example of the output voltage from MISO resonant converter 1100. The output voltage from MISO resonant converter 1100 may be the average of the voltages from each of power sources 110-1, 110-2, and 110-3. Figure 12A, graphs 1316, 1318, and 1320 may correspond to the power drawn from power sources 110-1, 110-2, and 110-3 respectively.

Figure 12D shows an example of results from a simulation of a MISO resonant converter, for example, MISO resonant converter 1100. Specifically, Figure 12D shows separate time-periods, T1, T2, T3, and T4. Time periods T1 and T4 may be associated with power source 110-1 and may have a duration of 2 microseconds (µs), which may correspond to a frequency of 500 Kilohertz (KHz). Time period T2, associated with power source 110-2, may have a duration of 2.38 µs, which may correspond to a frequency of 420 KHz. Time period T3, associated with power source 110-3 may have a duration of 2.17 µs, which may correspond to a frequency of 460 KHz. In Figure 12D, signals 1330-1 and 1330-2 may correspond to a control signal applied to switch 1106-1 in multiplexer 1106 during time-periods T1 and T4 respectively. Signal 1332 may correspond to a control signal applied to switch 1106-2 in multiplexer 106 during time-period T2, and signal 1334 may correspond to a control signal applied to switch 1106-3 in multiplexer 1106 during time-period T3. Waveforms 1336-1, 1338, 1340 may form a sequence of waveforms of the current, I-Lm, through magnetization inductor 1118. Waveform 1336-2 may be a part of a next sequence of waveforms. As can be seen in Figure 12D, T1 may be the shortest time-period, T2 may be the longest time-period, and T3 may be the second longest time-period. However, the Root Mean Square (RMS) value of I-Lm during T2 may be the smallest, the RMS value of I-Lm during T3 may be the highest, and the RMS value of I-Lm during T4 (which, in Figure 3D, is of the same duration as T1) may be the second highest. Accordingly, the RMS value of I-Lm may be affected by the time-period previous to the time-period associated with the power source. For example, the duration of T1 may be the shortest, and the RMS value of I-Lm during T2 may be the smallest.

In the example described in Figure 12D, and the simulation used to generate the signals shown in Figure 3D, 3 power sources are used, each with constant output voltage of 20.4 Volts, and time-periods, T1, T2, and T3, of controlling switches 1106-1, 1106-2, and 1106-3 to a conducting state are applied cyclically (e.g., T4 is of equal duration to T1).

It may be noted that in the graphs shown in Figures 12A-12D, as well as in the description which follows, the MISO resonant converter 1100 may be presumed to be controlled in the inductive region of the frequency response of the power gain of resonant circuit 1104, where increasing the switching frequency of switches 1106-1, 1106-2, ..., 1106-N (and of complementary switch 1108), and thus of the waveforms generated at resonant circuit 1104, may reduce the power gain and may reduce the frequency increases of the power gain. As described herein, MISO resonant converter 1100 may be controlled in the capacitive region of the frequency response of the power gain of resonant circuit 1104, where increasing the frequency increases the switching frequency of switches 1106-1, 1106-2, ..., 1106-N (and of complementary switch 1108) increases the power gain and reducing the frequency reduces the power gain.

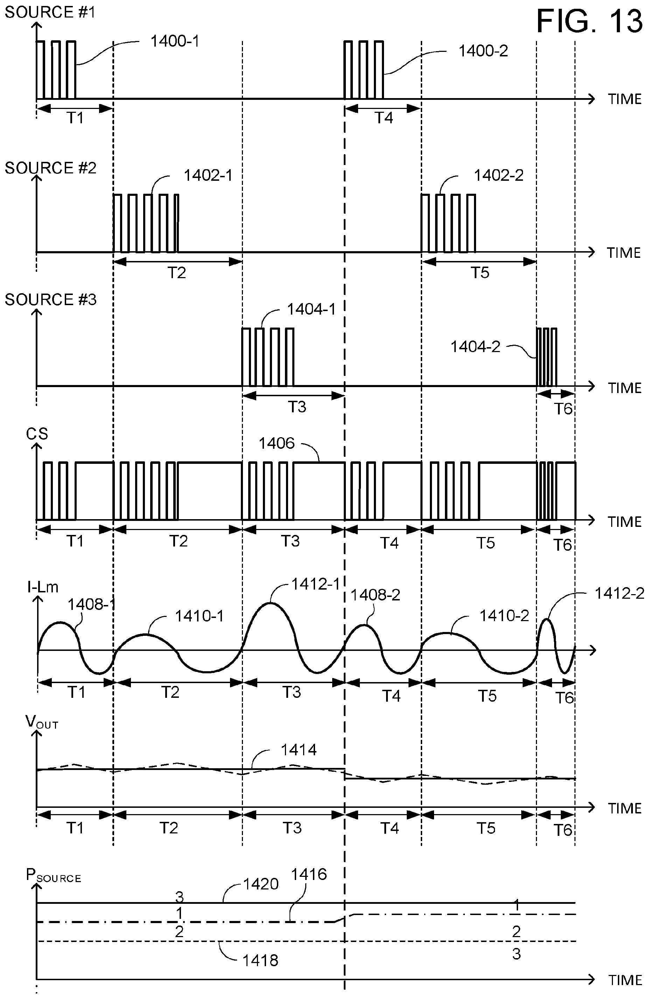

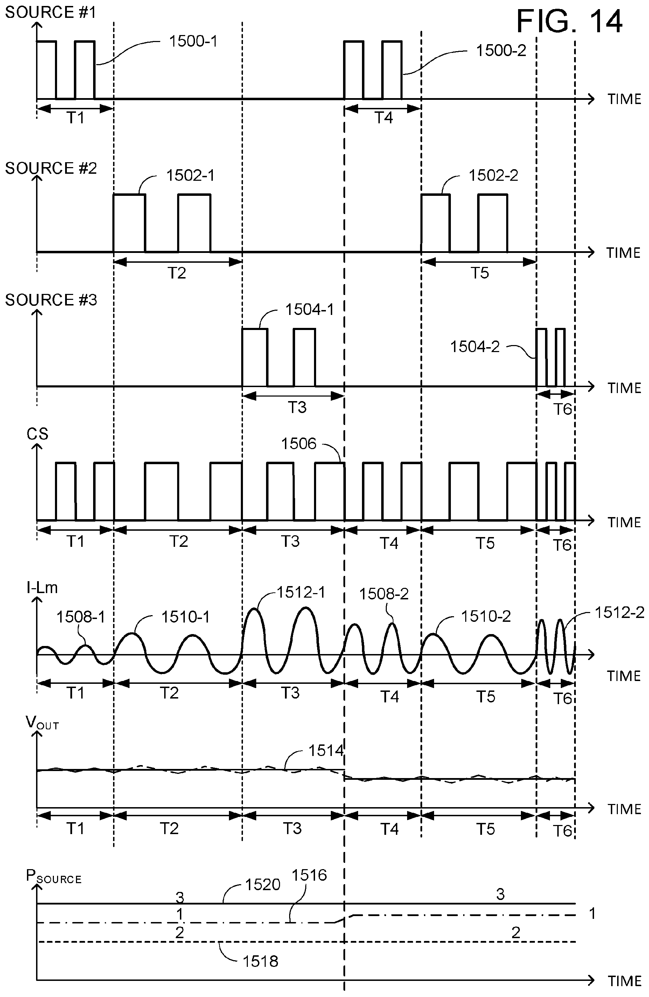

As described herein in the example shown in Figure 12A, power device controller 901 may control switches 1106-1, 1106-2, ..., 1106-N, and complementary switch 1108, during the corresponding time-periods T1, T2, T3, T4, T5, and T6, such that the switches 1106-1, 1106-2, ..., 1106-N may be in a conducting state for a time-interval, within the corresponding time-period, having a duration of half of the corresponding time-period (e.g., a duty cycle of 50%). Nevertheless, power device controller 901 may use other switching schemes to control 1106-1, 1106-2, ..., 1106-N, and complementary switch 1108. Examples of switching schemes, other than the switching schemes shown in Figure 12A, may be shown in Figures 13 and 14. Figures 13 and 14 show example waveforms of a MISO resonant converter according to the disclosure herein. Power device controller 901 may use duty cycles other than fifty percent (50%).

With reference to Figure 4, power device controller 901 may modulate switches 1106-1, 1106-2, ..., 1106-N and complementary switch between a conducting state and a non-conducting state, during the time-interval, within the corresponding time-period. Similar to Figure 12A, Figure 13 shows two sequences (multiplexing cycles), each of separate time-periods. In Figure 13, signal 1400-1 may correspond to a control signal applied to switch 1106-1 in multiplexer 1106 during time-period T1, and signal 1400-2 may correspond to a control signal applied to switch 1106-1 in multiplexer 1106 during time-period T4. Signal 1402-1 may correspond to a control signal applied to switch 1106-2 in multiplexer 1106 during time-period T2, and signal 1402-2 may correspond to a control signal applied to switch 1106-2 in multiplexer 1106 during time-period T5. Signal 1404-1 may correspond to a control signal applied to switch 1106-3 in multiplexer 1106 during time-period T3, and signal 1404-2 may correspond to a control signal applied to switch 1106-3 in multiplexer 1106 during time-period T6. Signal 1406 may correspond to the control signal applied to complementary switch 1108. In the example shown in Figure 13, the duty cycle used of control signals 1400-1, 1402-1, 1402-1, 1400-2, 1402-2, and 1404-2, during the corresponding time periods T1, T2, T3, T4, T5, and T6, is fifty percent (50%). As seen in Figure 13, control signals 1400-1, 1402-1, 1402-1, 1400-2, 1402-2, and 1404-2 may be modulated. In the example shown in Figure 13, waveforms 1408-1, 1410-1, and 1412-1 may form a first sequence of waveforms of the current, I-Lm, through magnetization inductor 1118 during the first multiplexing cycle, where waveform 1408-1 may correspond to power source 110-1, waveform 1410-1 may correspond to power source 110-2, and waveform 1412-1 may correspond to power source 110-3. Waveforms 1408-2, 1410-2, and 1412-2 may form a second sequence of waveform of the current, I-Lm, through magnetization inductor 1118, during a second multiplexing cycle, where waveform 1408-2 may correspond to power source 110-1, waveform 1410-2 may correspond to power source 110-2, and waveform 1412-2 may correspond to power source 110-3. In Figure 13, graph 1414, which shows the output voltage from MISO resonant converter 1100. The output voltage from MISO resonant converter 1100 may be the average of the voltages from each of power sources 110-1, 110-2, and 110-3. As shown in Figure 13, graphs 1416, 1418, and 1420 may correspond to the power drawn from power sources 110-1, 110-2, and 110-3 respectively.

In the switching scheme example shown in Figure 14, power device controller 901 may control switches 1106-1, 1106-2, ..., 1106-N and complementary switch 1108 to alternate between a conducting state and a non-conducting state multiple times during the corresponding time-periods T1, T2, T3, T4, T5, and T6. In Figure 14, signal 1500-1 may correspond to a control signal applied to switch 1106-1 in multiplexer 1106 during time-period T1, and signal 1500-2 may correspond to a control signal applied to switch 1106-1 in multiplexer 1106 during time-period T4. Signal 1502-1 may correspond to a control signal applied to switch 1106-2 in multiplexer 1106 during time-period T2, and signal 1502-2 may correspond to a control signal applied to switch 1106-2 in multiplexer 1106 during time-period T5. Signal 1504-1 may correspond to a control signal applied to switch 1106-3 in multiplexer 1106 during time-period T3, and signal 1504-2 may correspond to a control signal applied to switch 1106-3 in multiplexer 1106 during time-period T6. Signal 1506 may correspond to the control signal applied to complementary switch 1108. In the example shown in Figure 14, the duty cycle used of control signals 1500-1, 1502-1, 1502-1, 1500-2, 1502-2, and 1504-2, during the corresponding time periods T1, T2, T3, T4, T5, and T6, is fifty percent (50%). As seen in Figure 14, control signals 1500-1, 1502-1, 1502-1, 1500-2, 1502-2, and 1504-2 alternate multiple times between a high state and a low state during the corresponding time-periods T1, T2, T3, T4, T5, and T6 to control corresponding switches 1106-1, 1106-2, and 1106-3 between a conducting state and a non-conducting state. In the example shown in Figure 14, waveforms 1508-1, 1510-1, and 1512-1 may form a first sequence of waveforms of the current, I-Lm, through magnetization inductor 1118 during the first multiplexing cycle, where waveform 1508-1 may correspond to power source 110-1, waveform 1510-1 may correspond to power source 110-2, and waveform 1512-1 may correspond to power source 110-3. Waveforms 1508-2, 1510-2, and 1512-2 may form a second sequence of waveform of the current, I-Lm, through magnetization inductor 1118, during a second multiplexing cycle, where waveform 1508-2 may correspond to power source 110-1, waveform 1510-2 may correspond to power source 110-2, and waveform 1512-2 may correspond to power source 110-3. In Figure 14, graph 1514, which shows the output voltage from MISO resonant converter 1100. The output voltage from MISO resonant converter 1100 may be the average of the voltages from each of power sources 110-1, 110-2, and 110-3. As shown in Figure 14, graphs 1516, 1518, and 1520 may correspond to the power drawn from power sources 110-1, 110-2, and 110-3 respectively.

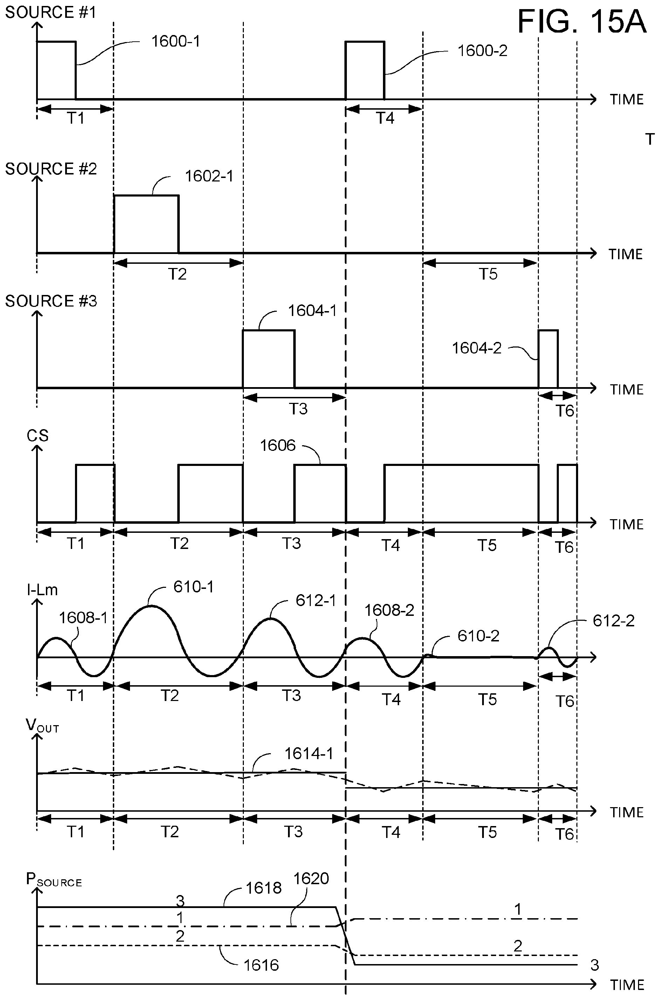

In some cases, power setpoint tracking may be performed on the power sources 110-1, 110-2, ..., 110-N. For example, when power sources 110-1, 110-2, ..., 110-N are photovoltaic power sources, MISO resonant converter 1100 may be used to draw maximum power from power sources 110-1, 110-2, ..., 110-N. For example, power device 900 may perform MPP tracking (MPPT) on each of power sources 110-1, 110-2, ..., 110-N (e.g., the MPP of each of power sources 110-1, 110-2, ..., 110-N may be the corresponding power setpoint). When performing MPPT, it may be shown that power device controller 901 may change the corresponding time-periods switching of switches 1106-1, 1106-2, ..., 1106-N, and complementary switch 1108 (and thus the frequencies of the waveforms generated at resonant circuit 1104). For example, power device controller 901 may need to reduce a time-period Ti of switch 1106-i (e.g., increase the frequency), to track the MPP of power source 110-i (instead of controlling time-period Ti-1 when tracking a power setpoint of a constant DC voltage source such as described above in Figures 12A-12C). When performing MPPT, power device controller 901 may need to change the corresponding switching time-periods of switches 1106-1, 1106-2, ..., 1106-N, and complementary switch 1108 (and thus the frequencies of the waveforms generated at resonant circuit 1104), such that these time-periods exceed a limit or limits. For example, power device controller 901 may need to reduce a time-period Ti of switch 1106-i (increase the frequency) below a lower limit. For example, power device controller 901 may need to increase a time-period Ti of switch 1106-1 (decrease the frequency) above an upper limit. In such cases, power device controller 901 may employ pulse skipping. Figure 15A shows and example of a first pulse skipping scheme where during time-interval T5, switch 1106-2 is maintained in a non-conducting state and complementary switch is maintained in a conducting state.

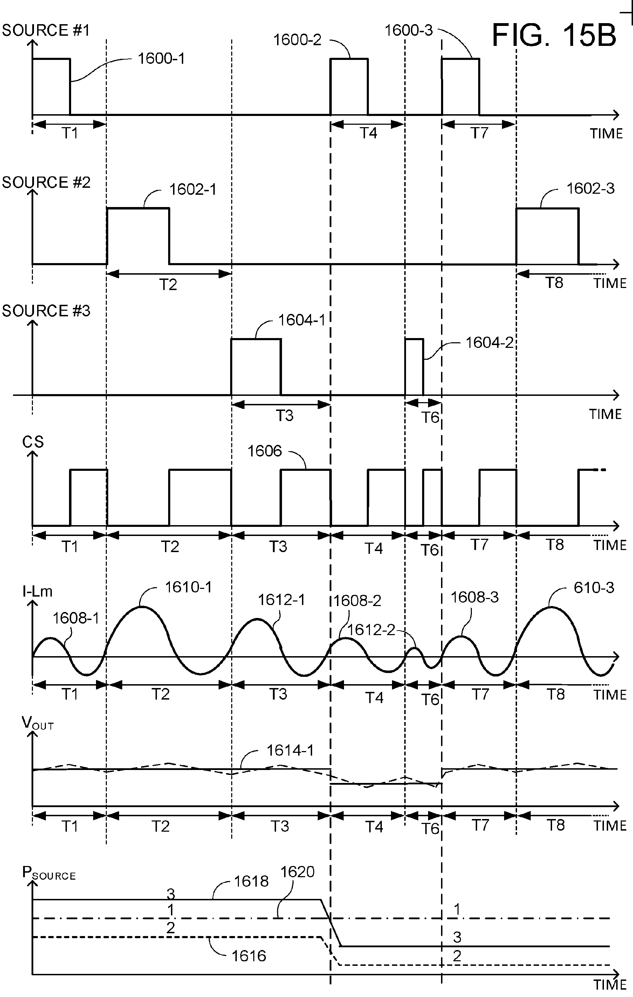

Figure 15B shows an example of a second pulse skipping scheme where the first multiplexing cycle includes time-periods T1, T2, and T3 corresponding to power sources 110-1, 110-2, and 110-3, and a second, subsequent multiplexing cycle includes only time-periods T4 and T6 that may correspond to power sources 110-2 and 110-3 (e.g., power source 110-2 is omitted from the multiplexing cycle and the multiplexing cycle includes the time-periods corresponding to power sources 110-1 and 110-3). A third multiplexing cycle includes T7, T8, and T9 corresponding to power sources 110-1, 110-2, and 110-3, however, only T7 and part of T8 are shown in Figure 15B. Using this second pulse skipping scheme reduces the switching frequency of switch 1106-2 and thus the power drawn from power source 110-2.

In Figures 15A and 15B, signal 1600-1 may correspond to a control signal applied to switch 1106-1 in multiplexer 1106 during time-period T1, signal 1600-2 may correspond to a control signal applied to switch 1106-2 in multiplexer 1106 during time-period T4, and signal 1600-3 may correspond to a control signal applied to switch 1106-1 in multiplexer 1106 during time-period T7. Signal 1602-1 may correspond to a control signal applied to switch 1106-2 in multiplexer 1106 during time-period T2, signal 1602-3 may correspond to a control signal applied to switch 1106-2 in multiplexer 1106 during time-period T8. Signal 1604-1 may correspond to a control signal applied to switch 1106-3 in multiplexer 1106 during time-period T3, and signal 1604-2 may correspond to a control signal applied to switch 1106-3 in multiplexer 1106 during time-period T6. Signal 1606 may correspond to the control signal applied to complementary switch 1108. In the example shown in Figures 15A and 15B, the duty cycle used of control signals 1600-1, 1602-1, 1602-1, 1600-2, 1604-2, 1600-3, 1602-3, during the corresponding time periods T1, T2, T3, T4, T6, T7 and T8 is fifty percent (50%). As seen in the example shown in Figure 15B, waveforms 1608-1, 1610-1, and 1612-1 may form a first sequence of waveforms of the current, I-Lm, through magnetization inductor 1118 during the first multiplexing cycle, where waveform 1608-1 may correspond to power source 110-1, waveform 1610-1 may correspond to power source 110-2, and waveform 1612-1 may correspond to power source 110-3. Waveforms 1608-2 and 1612-2 may form a second sequence of waveform of the current, I-Lm, through magnetization inductor 1118, during a second multiplexing cycle, where waveform 1608-2 may correspond to power source 110-1 and waveform 1612-2 may correspond to power source 110-3. Waveforms 1608-3 and 1610-3 may form a part of a third sequence of waveform of the current, I-Lm, through magnetization inductor 1118, during a second multiplexing cycle, where waveform 1608-3 may correspond to power source 110-1 and waveform 1610-2 may correspond to power source 110-2. Figure 15B, graph 1614, shows an example of the output voltage from MISO resonant converter 1100. The output voltage from MISO resonant converter 1100 may be the average of the voltages from each of power sources 110-1, 110-2, and 110-3. As shown in Figure 15B, graphs 1616, 1618, and 1620 may correspond to the power drawn from power sources 110-1, 110-2, and 110-3 respectively.

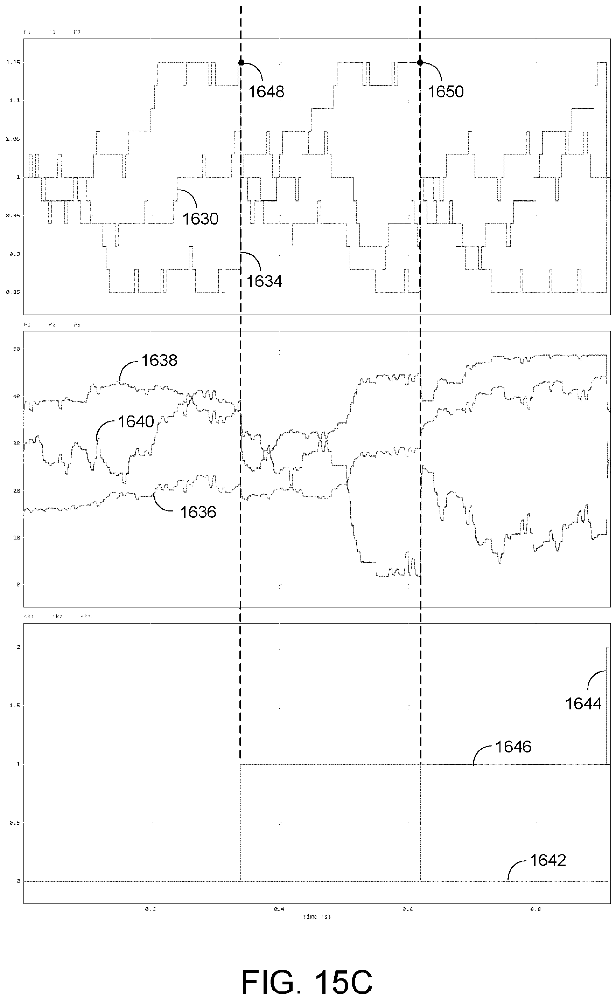

Figure 15C shows example simulation results for a MISO resonant converter 1100 that may be connected to three (3) power sources 110-1, 110-2, and 110-3, and where pulse skipping may be used. In Figure 15C, signal 1630 shows the normalized switching frequency switch 1106-1 corresponding to power source 110-1. Signal 1632 shows the normalized switching frequency switch 1106-2 corresponding to power source 110-2, and signal 1634 shows the normalized switching frequency switch 1106-3 corresponding to power source 110-3. Signal 1636 shows the power drawn from power source 110-1. Signal 1638 shows the power drawn from power source 110-2, and signal 1640 shows the power drawn from power source 110-3. Signal 1642 shows the number of pulses skipped for power source 110-1. Signal 1644 shows the number of pulses skipped for power source 110-2 and signal 1646 shows the number of pulses skipped for power source 110-3. As shown by signals 1632 Figure 15C, the switching frequency of switch 1106-2 reached a maximum at point 1648, and a plus was skipped, as shown by signal 1644, reduce this switching frequency. Similarly, as shown by signal 1634, the switching frequency of 1106-3 reached a maximum at point 1650, and a pulse was skipped, as shown by signal 1646, to reduce this switching frequency. For example, with regards to power source 110-2, as shown by signal 1638, although the power drawn from power source 110-2 initially decreased after the commencement of pulse skipping, the power eventually (e.g., a time 0.7) rises to a level above the power level drawn from power source 110 before pulse skipping commenced.

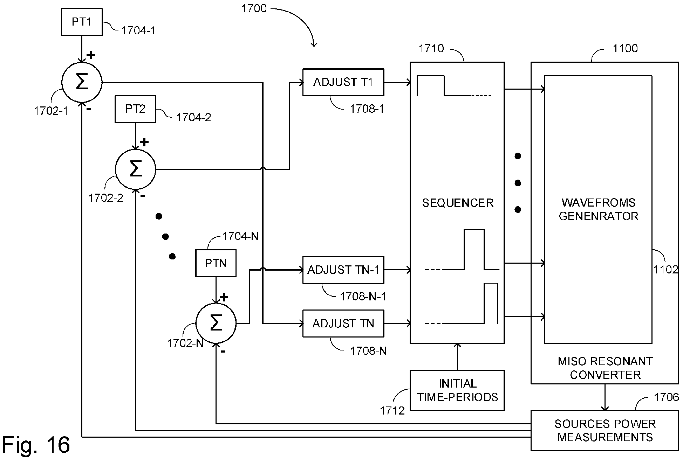

Figure 16 shows an example of a control loop 1700 for controlling power from a plurality of power sources 110, using MISO resonant converter 1100, where a plurality of power sources 110 are constant DC voltage power sources (e.g., batteries, battery packs, and/or battery cells). In control loop 1700, power device controller 901 may determine, using summers 1702-1, 1702-2, ..., 1702-N, a difference between a corresponding power setpoint 1704-1, 1704-2, ..., 1704-N, and a corresponding measurement of a power provided by power sources 110-1, 110-2, ..., 110-N, in control block 1706 as may be measured by sensor(s) 902 (Figures 10A and 2B). If a plurality of power sources 110 are constant DC voltage power sources, power device controller 901 may determine the power from power sources 110-1, 110-2, ..., 110-N. The power may be determined, for example, by measuring, using sensors(s) 902, a respective current flowing from a corresponding terminal 604-1, 604-2, ..., 604-N toward connection point A, and multiplying by the respective voltage of each of power sources 110-1, 110-2, ..., 110-N. Power device controller 901 may use sensors(s) 902 to measure the voltages of each of voltage power sources 110-1, 110-2, ..., 110-N, as well as measurements of the current from each of power sources 110-1, 110-2, ..., 110-N to determine the respective power provided by power sources 110-1, 110-2, ..., 110-N.

Based on the differences (e.g., within a determined margin of error) between a corresponding power setpoint 1704-1, 1704-2, ..., 1704-N and a corresponding measurement of a power provided by power sources 110-1, 110-2, ..., 110-N, power device controller 901 may adjust the time-period of a waveform previous to the time-period associated with the power source at corresponding time-period adjust blocks 1708-1, 1708-2, ..., and 7108-N. For example, power device controller 901 may adjust, based on the difference between power setpoint 1704-2 and the power measurement from power source 110-2, the duration of time-period T1, associated with power source 110-1, using a time-period adjust block 1708-1. Power device controller 901 may adjust, based on the difference between power setpoint 1704-N and the power measurement from power source 110-N, the duration of time-period TN-1, associated with power source 110-N-1, using time-period adjust block 1708-N-1. In Figure 16, power device controller 901 may adjust, based on the difference between power setpoint 1704-1 and the power measurement from power source 110-1, the duration of time-period TN, associated with power source 110-N, using time-period adjust block 1708-N. If power device controller 901 controls MISO resonant 1100 converter in the inductive region of the frequency response of the power gain of resonant circuit 1104, time-period adjust blocks 1708-1, ..., 1708-N-1, 1708-N may reduce the corresponding time-period (e.g., increase the frequency) if the power measurement is large than the setpoint, and increase the corresponding time-period (e.g., reduce the frequency) if the power measurement is large than the setpoint.

Based on the time-periods from time-periods adjust blocks 1708-1, ..., 1708-N-1, 1708-N, power device controller 901, using sequencer 1710, may determine a sequence of separate time periods, according to the switches of 1106-1, 1106-2, ..., 1106-N in multiplexer 1106 that may be controlled, and thus the sequence of waveforms generated by waveforms generator 1102 and resonant circuit 1104. Initially (e.g., at system start-up), sequencer 1710 may use a set of initial time periods 1712. It may be noted that the sequence of separate time-periods may be different during each multiplexing cycle.

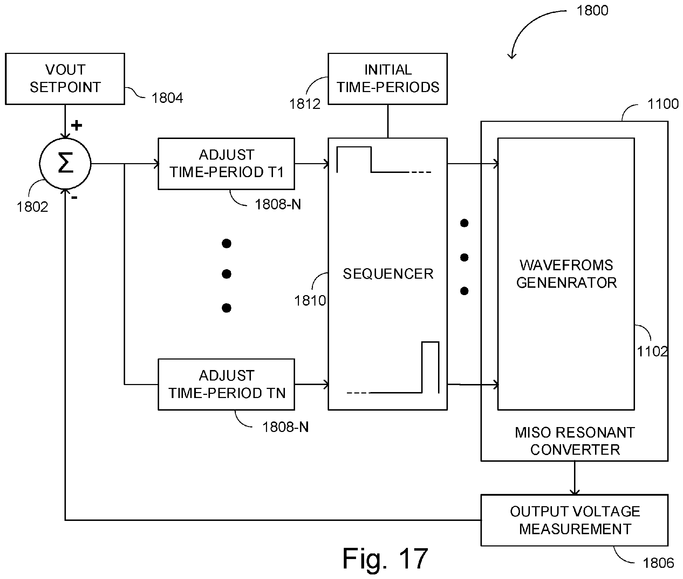

Figure 17 shows an example of a control loop 1800 for controlling an output voltage from MISO resonant converter 1100, where a plurality of power sources 110 are constant DC voltage power sources. In control loop 1800, power device controller 901 may determine, using summer 1802 a difference between an output voltage power setpoint 1804, and a measurement (e.g., output voltage measurement control block 1806) of the output voltage of MISO resonant converter 1100 (e.g., the voltage between terminal 1114-1 and terminal 1114-2). Power device controller 901 may use sensors(s) 902 to measure the output voltage of MISO resonant converter 1110.

Based on the difference (e.g., within a determined margin of error) between the voltage output set point 1804 and a measurement of the output voltage of MISO resonant converter 1100, power device controller 901 may adjust one or more of the time-periods of the corresponding waveforms associated with power sources 110-1, 110-2, ..., 110-3 at corresponding time-period adjust blocks 1808-1, 1808-2, ..., and 1808-N. Based on the time-periods from time-periods adjust blocks 1808-1, ..., 1808-N-1, 1808-N, power device power device controller 901, using sequencer 1810 (which may be similar to sequencer 1710), may determine a sequence of separate time periods determined according to which switches of 1106-1, 1106-2, ..., 1106-N in multiplexer 1106 that may be controlled, and thus the sequence of waveforms generated by waveforms generator 1102 and resonant circuit 1104. Initially (e.g., at system start-up), sequencer 1810 may use a set of initial time periods 1812. It may be noted that the sequence of separate time-periods may be different during each multiplexing cycle. If power device controller 901 controls MISO resonant 1100 converter in an inductive region of the frequency response of the power gain, time-period adjust blocks 1808-1, 1808-2, ..., 1808-N may reduce the corresponding time-period (e.g., may increase the frequency) if the voltage measurement is larger than the voltage setpoint, and may increase the corresponding time-period (e.g., may reduce the frequency) if the voltage measurement is larger than the voltage setpoint.

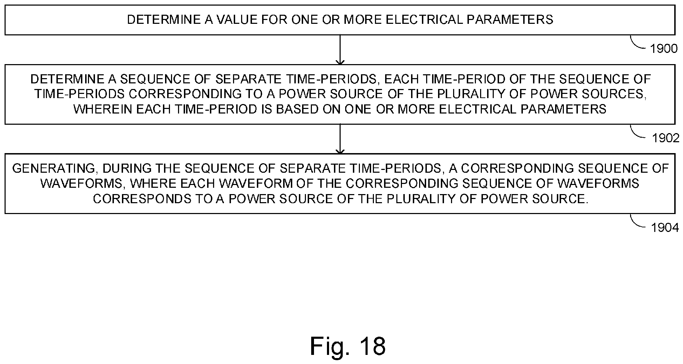

Figure 18 shows an example method for a MISO resonant converter 100. In step 1900, power device controller 901 may determine a value for one or more electrical parameters. For example, the one or more electrical parameters may comprise an output voltage from MISO resonant converter 1100. The one or more electrical parameters may comprise a power from power sources 110-1, 110-2, ..., 110-N.

In step 1902, power device controller 901 may determine, based on one or more electrical parameters, a sequence of separate time-periods (e.g., time periods T1, T2, and T3 as described herein in Figures 12A, 13, 14, 15A, and/or 15B). Each time-period of the sequence of separate time-periods may correspond to an associated power source 110-1, 110-2, ..., 110-N of the plurality of power sources 110.

In step 1904, power device controller 901 may control multiplexer 1106 and complementary switch 1108, to generate, during the sequence of separate time-periods, a corresponding sequence of waveforms (e.g., waveforms 1308-1, 1310-1 and 1312-1), where each waveform of the corresponding sequence of waveforms may correspond to a power source 110-1, 110-2, ..., 110-N of the plurality of power sources 110.

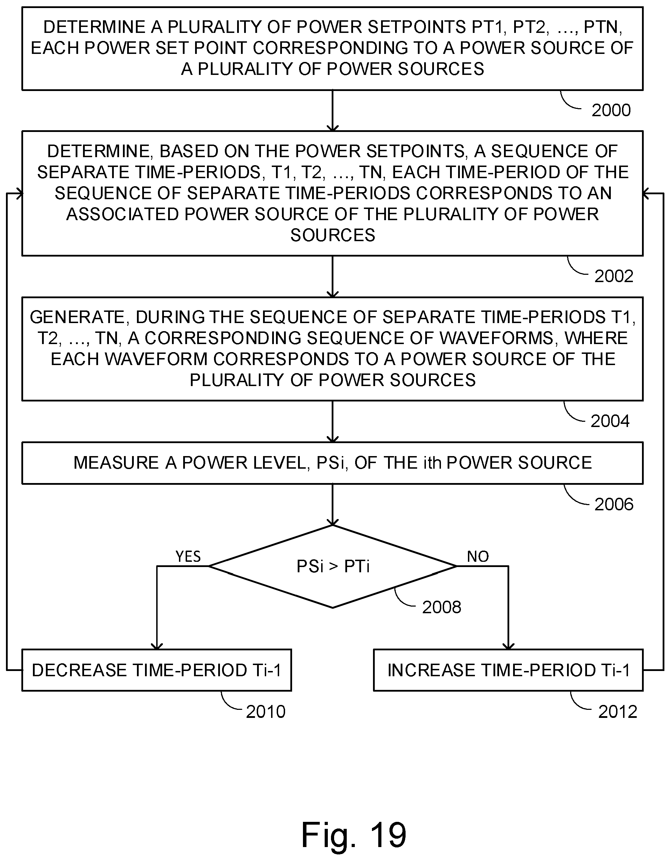

Figure 19 shows an example method for controlling a power from one or more power sources, such as power sources 110-1, 110-2, ..., 110-N, using a MISO resonant converter 100. In step 2000, power device controller 901 may determine a plurality of power setpoints PT1, PT2, ..., PTN, each power setpoint corresponding to a power source 110-1, 110-2, ..., 110-N of the plurality of power sources 110. The power setpoints may correspond to a determined power to be provided by each of power sources 110-1, 110-2, ..., 110-N. For example, each of power sources 110-1, 110-2, ..., 110-N may be a pack or a cell in a battery, and the power setpoints PT1, PT2, ..., PTN may be determined power to be provided by each pack or cell in the battery. Thus, the power provided by each cell or pack may be controlled.

In step 2002, power device controller 901 may determine, based on the power setpoints, a sequence of separate time-periods, T1, T2, ..., TN. Each time-period of the sequence of separate time-periods may correspond to an associated power source 110-1, 110-2, ..., 110-N of the plurality of power sources 110. Power device controller 901 may determine the corresponding time periods using a power gain frequency response, such as power gain frequency response 1322 (Figure 12B and 12C) of resonant circuit 1104.

In step 2004, power device controller 901 may control multiplexer 1106 and complementary switch 1108, to generate, during the sequence of separate time-periods T1, T2, ..., TN, a corresponding sequence of waveforms (e.g., waveforms 1308-1, 1310-1 and 1312-1, and/or waveforms 1308-2, 1310-2 and 1312-2 as described herein in Figure 12A, waveforms 1408-1, 1410-1 and 1412-1, and/or waveforms 1408-2, 1410-2 and 1412-2 as described herein in Figure 13A, waveforms 1508-1, 1510-1 and 1512-1, and/or waveforms 1508-2, 1510-2 and 1512-2 as described herein in Figure 14A), where each waveform may correspond to one of power sources 110-1, 110-2, ..., 110-N.

In step 2006, sensor(s) 204 may measure a power level, PSi, of the ith power source (e.g., a power 110-i of power sources 110-1, 110-2, ..., 110-N).

In step 2008, power device controller 901 may determine the level of the power level PSi, relative to the corresponding power setpoint PTi. If the power level PSi is higher than the corresponding power setpoint PTi, the method may proceed to step 1010. If the power level PSi is lower than the corresponding power setpoint PTi, the method may proceed to step 1012.

In step 2010, power device controller 901 may decrease the time-period Ti-1 of a waveform previous to the time-period associated with the power source 110-i.

In step 2012, power device controller 901 may increase the time-period Ti-1 of a waveform previous to the time-period associated with the power source 110-i.

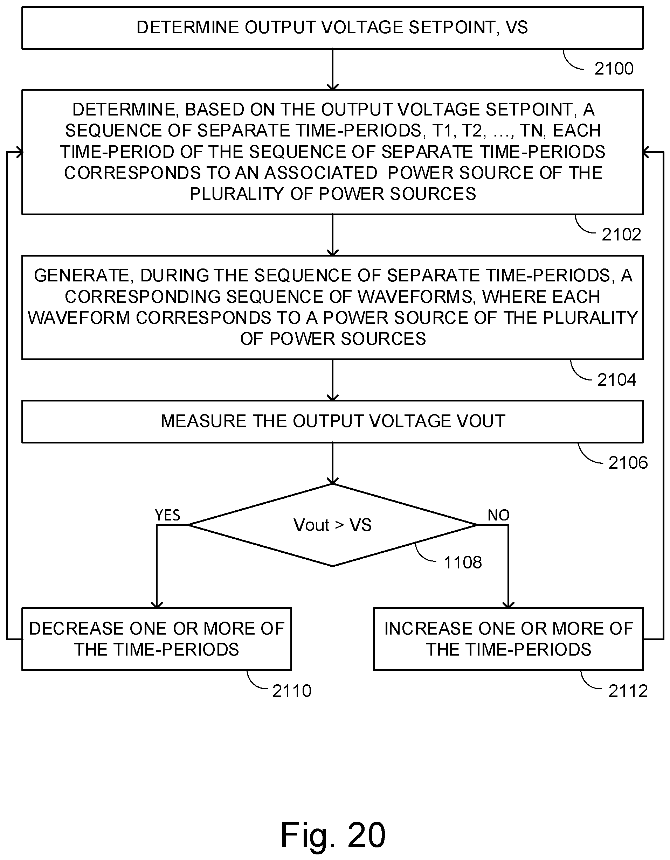

Figure 20 shows an example method for controlling output voltage from a MISO resonant converter, such as MISO resonant converter 1100. In step 2100, power device controller 901 may determine a output voltage setpoint VS of the output voltage (e.g., the voltage between terminal 1114-1 and terminal 1114-2) of MSO resonant converter 1100.

In step 2102, power device controller 901 may determine, based on the output voltage setpoint, a sequence of separate time-periods, T1, T2, ..., TN, each time-period of the sequence of separate time-periods may correspond to an associated power source 110-1, 110-2, ..., 110-N of the plurality of power sources 110. Power device controller 901 may determine the corresponding time-periods using a power gain frequency response, such as power gain frequency response 1322 of resonant circuit 1104.

In step 2104, power device controller 901 may control multiplexer 1106 and complementary switch 1108, to generate, during the sequence of separate time-periods T1, T2, ..., TN, a corresponding sequence of waveforms (e.g., waveforms 1308-1, 1310-1 and 1312-1, and/or waveforms 1308-2, 1310-2 and 1312-2), where each waveform may correspond to one of power sources 110-1, 110-2, ..., 110-N.

In step 2106, sensor(s) 902 may measure the output voltage from MISO resonant converter 1100.

In step 2108, power device controller 901 may determine the level of the output voltage relative to the output voltage setpoint. If the level of the output voltage is higher than level of the output voltage setpoint, the method may proceed to step 2110. If the level of the output voltage is lower than level of the output voltage setpoint, the method may proceed to step 2112.

In step 2110, power device controller 901 may decrease the one or more of time-periods T1, T2, ..., TN.

In step 2112, power device controller 901 may increase one or more of time-periods T1, T2, ..., TN.

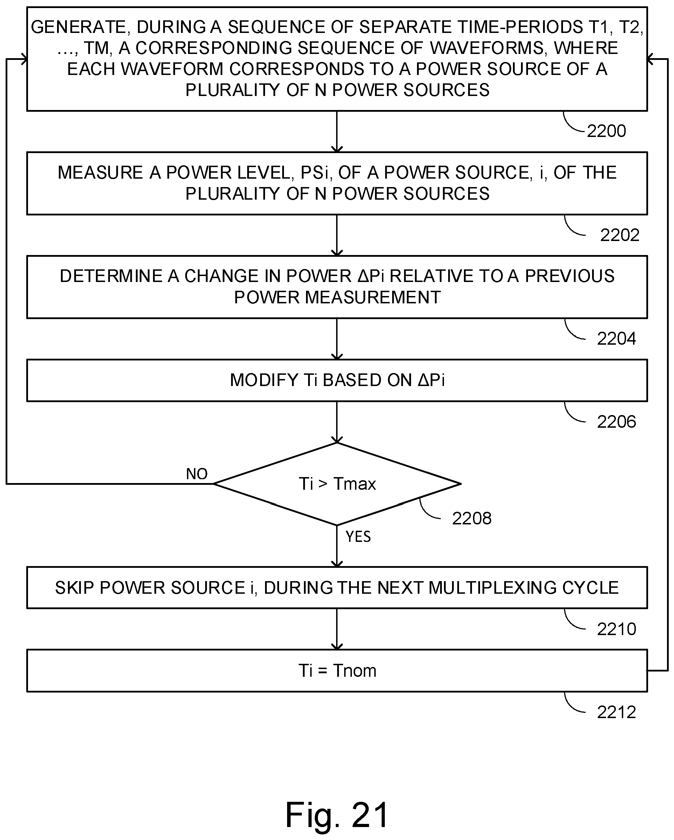

Figure 21 shows an example method for determining a maximum power point (MPP) of a power source such as a photovoltaic module, a photovoltaic sub-string, and/or a photovoltaic cell using a MISO resonant converter 1100. In step 2200, power device controller 901 may control multiplexer 1106 and complementary switch 1108 to generate, during a sequence of separate time-periods T1, T2, ..., TM, a corresponding sequence of waveforms, where each waveform may correspond to a power source of a plurality of N power sources 110-1, 110-2, ..., 110-N, where M is smaller or equal to N (e.g., the number of generated waveforms may be smaller or equal to the number of power sources).

In step 2202, sensors(s) 902 may measure a power level, PSi, of a power source, i, of the plurality of N power sources.

In step 2204, power device controller 901 may determine a change in the power level, ΔPi, relative to a previous power measurement.

In step 2206, power device controller 901 may modify the time-period, Ti, that may be associated with the ith power source, based on ΔPi. For example, if ΔPi indicates that the power from the ith power source reduces, and power device controller 901 increased time-period Ti in a previous multiplexing cycle, power device controller 901 may decrease time-period Ti in the current multiplexing cycle. If ΔPi indicates that the power from the ith power source reduces, and power device controller 901 decreased time-period Ti in a previous multiplexing cycle, power device controller 901 may increase time-period Ti in the current multiplexing cycle. If ΔPi indicates that the power from the ith power source increases, and power device controller 901 decreased time-period Ti in a previous multiplexing cycle, power device controller 901 may decrease time-period Ti in the current multiplexing cycle. If ΔPi indicates that the power from the ith power source reduces, and power device controller 901 increased time-period Ti in a previous multiplexing cycle, power device controller 901 may increase time-period Ti in the current multiplexing cycle.

In step 2208, power device controller 901 may determine the duration of the modified time-period Ti relative to a maximum value, Tmax. If the value of Ti is larger than Tmax, this may indicate that the MISO resonant converter reached a limit beyond which the output from power source i may not be modified by changing Ti, and the method may proceed to step 2210. If the value of Ti is smaller than Tmax, the method may return to step 2200.

In step 2210, power device controller 901 may skip power source i, during the next multiplexing cycle.

In step 2212, the time-period Ti may be set to a nominal value Tnom to allow modification of Ti in subsequent multiplexing cycles.

Figure 15B and 21 show an example of pulse skipping, according to the disclosure herein, and how to use pulse skipping, if performing MPPT on power source 110-1, 110-2, ..., 110-N, and where a time-period Ti of source 110-i may reach an upper limit. In cases in which a pulse of source 110-i is skipped, and the time-period Ti reached a lower limit frequency, a pulse may be added. In MISO resonant converter 1100, according to the disclosure herein, the power drawn from one of power sources 110-1, 110-2, ..., 110-N may affect the power drawn from other ones of power sources 110-1, 110-2, ..., 110-N. In cases in which the number of pulses skipped reached a limit on the number of pulse skips, a pulse from another power source of power sources 110-1, 110-2, ..., 110-N may be skipped.

If power sources 110-1, 110-2, ..., 110-N are battery pack or battery cells in a battery, such as an electrical vehicle (EV) battery or a backup battery for a home, MISO resonant converter 1100, as described herein, may be used to alternately draw power from each power source of power sources 110-1, 110-2, ..., 110-N, to draw power from all of power sources 110-1, 110-2, ..., 110-N concurrently, or to alternately draw power groups of power sources from plurality of power sources 110. For example, in cases where a plurality of power sources 110 includes four (4) sources 110-1, 110-2, 110-3, and 110-4, MISO resonant converter 100 may draw power from power sources 110-1 and 110-3 in a first multiplexing cycle, and draw power from power sources 110-2 and 110-4 in a second, multiplexing cycle. Thus, power device controller 901 may control MISO resonant converter to match the number of power sources from which power is drawn to the power demand of a load connected to MISO resonant converter 100.

As described herein, MISO resonant converter may be a bidirectional converter converting, which may convert power from terminals 604-1, 604-2, ..., 604-N to terminals 1114-1 and 1114-2, and from terminals 1114-1 and 1114-2 to terminals 604-1, 604-2, ..., 604-N. Thus, by controlling switches 1106-1, 1106-2, ..., 1106-N power device controller 901 may select to which terminals of terminals 604-1, 604-2, ..., 604-N, provide power. For example, if power sources 110-1, 110-2, ..., 110-N are battery pack or battery cells in a battery, controller may select which battery packs of battery cells to charge. In cases in power sources 110-1, 110-2, ..., 110-N are photovoltaic sources, power device controller 901 may select to which of the photovoltaic source provide reverse current (e.g., for electroluminescence imaging purposes, or IV curve characterization purposes). Determining the direction of power conversion may be based on controlling the current from or into terminals 604-1, 604-2, ..., 604-N (e.g., to be either positive or negative).

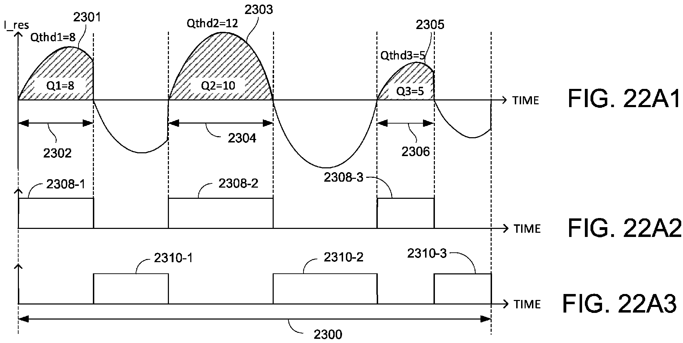

As mentioned above, to perform power setpoint tracking such as MPPT, power device controller 901 may change the corresponding switching time-periods of switches 1106-1, 1106-2, ..., 1106-N, and complementary switch 1108 (and thus change the frequencies of the waveforms generated at resonant circuit 1104). For example, power device controller 901 may need to increase or decrease a switching time-period, Ti, of switch 1106-i (e.g., change the frequency) to track the MPP of power source 1110-i. Increasing or decreasing a switching time-period, Ti, of switch 1106-i may increase or decrease the time-period of the multiplexing cycle respectively. According to the disclosure herein, power device controller 901 may perform MPPT using accumulated charge measurements, as further explained herein in conjunction with Figures 22A1 & 22A3, 22B1 & 22B3, and 22C1 & 22C3, 23 and 24. Controlling the power using accumulated charge measurement, may reduce the effect of switching time-periods other than Ti, on the power extracted from power source 1110-i.

Accumulated charge may be determined to be related to the MPP of a power source (e.g., a photovoltaic panel) by determining the current Impp. Since current is a measure of charge per unit of time (I=Q/T), the charge related to the MPP, Qmpp (power setpoint charge), may be determined, for example, by multiplying the Impp by T (Q=I*T), where T may be a measure of a time-period (further discussed below). Thus, for a power source, i, connected to resonant circuit 104, the charge, Qi, may be determined (e.g., calculated using a current integrator). Qi may be compared to Qmpp. Power source, i, may be disconnected from resonant circuit 104 when Qi equals Qmpp. However, in some cases, the Qi may not reach Qmpp by the time switch 106-i is to be transitioned to a non-conducting state and switch 1108 is to be transitioned to a conducting state (e.g., when the current, I, completes a half cycle). Therefore, an additional switching period corresponding to source i may be added to the multiplexing cycle or to a subsequent multiplexing cycle, as further elaborated below.

Reference is now made to Figures 22A1, 22A2 and 22A3, 22B, 22B2 and 22B3, 22C1, 22C2 and 22C3, and 22D1, 22D2 and 22D3, which show waveforms related to MPPT in a MISO resonant converter (e.g., MISO resonant converter 1100) according to the disclosure herein. Figures 22A1, 22B1, 22C1, and 22D1 show waveforms 2301, 2303, and 2305 of the resonant current, Ires, flowing through the resonant circuit (e.g., between point A and point F), as shown in Figures 11B-11F. Figures 22A2, 22B2, 22C2, and 22D2 show waveforms of control signals applied to switches 1106-1, 1106-2, 1106-3 in multiplexer 1106. Figures 22A3, 22B3, 22C3, and 22D3 show waveforms of control signals applied to complementary switch 1108. For clarity of the explanations, Figures 22A1-22A3, 22B1-22B3, 22C1-22C3, and 22D1-22D3 show an example relating to a MISO resonant converter which includes three terminals 604-1, 604-2, and 6040-3, and three corresponding switches 1106-1, 1106-2, 1106-3 in multiplexer 1106. However, this should not be considered as limiting. The description relating to Figures 22A1-22A3, 22B1-22B3, 22C1-22C3, and 22D1-22D3 may apply to cases of two or more terminals with two or more switches 1106-1, 1106-2, ..., 1106-N in multiplexer 1106.

Figures 22A1-22A3 show waveforms during a multiplexing cycle 2300, which include corresponding connection events of three power sources to MISO resonant converter 1100. During time-period 2302, switch 1106-1 may be transitioned to a conducting state as indicated by control signal 2308-1, which may connect a corresponding power source (e.g., 1110-1) to resonant circuit 1104. Complementary switch 1108 may transition to a non-conducting state. During time-period 2302, the resonant current, Ires, shown as waveform 2301, may be integrated (e.g., using a current integrator) to determine the charge, Q1, corresponding to Ires flowing during time-period 2302. Q1 may be compared with a threshold charge Qthd1 (which may be the charge corresponding to the MPP of power source 110-1). In the example shown in Figure 22A1, Qthd1 is equal to 8 (Qthd1=8). Once Q1 reaches 8 (Q1=8), switch 1106-1 may be transitioned to a non-conducting state, and complementary switch 108 may be transitioned to a conducting state (as indicated by control signal 2310-1).

During time-period 2304, switch 1106-2 may be transitioned to a conducting state as indicated by control signal 2308-2, connecting a corresponding power source (e.g., 1110-2) to resonant circuit 1104. Complementary switch 1108 may transition to a non-conducting state. During time-period 2304, the resonant current, Ires, shown as waveform 2303, may be integrated to determine the charge, Q2, corresponding to Ires flowing during time-period 2304. Q2 may be compared with a threshold charge Qthd2. In the example shown in Figure 22A1, Qthd2 (e.g., which may correspond to the charge corresponding to the MPP of power source 110-2) is equal to 12 (Qthd2=12). In the example shown in Figure 22A1, Ires has completed a half cycle when Q2 reached 10 (Q2=10), before reaching Qthd2. Therefore, switch 1106-2 may be transitioned to a non-conducting state, and complementary switch 1108 may be transitioned to a conducting state (as indicated by control signal 2310-2) before Q2 reaches Qthd2. In such a case, the corresponding power source (e.g., power source 1110-2) may not operate at the corresponding MPP.

During time-period 2306, switch 1106-3 may be transitioned to a conducting state as indicated by control signal 2308-3, connecting a corresponding power source (e.g., 110-3) to resonant circuit 1104. Complementary switch 1108 may transition to a non-conducting state. During time-period 2306, the resonant current, Ires, shown as waveform 2305, may be integrated to determine the charge, Q3, corresponding to Ires during time-period 2306. Q3 may be compared with a threshold charge Qthd3 (which may be the charge corresponding to the MPP the power source). In the example shown in Figure 22A1, Qthd3 is equal to 5 (Qthd3=5). Once Q3 reaches 5 (Q3=5), switch 1106-3 may be transitioned to a non-conducting state, and complementary switch 1108 may be transitioned to a conducting state (as indicated by control signal 2310-3).

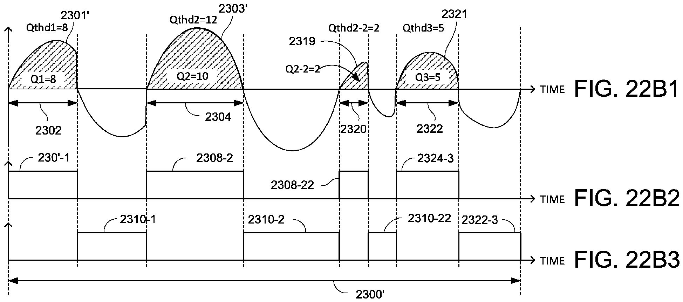

As mentioned in the example above, when switch 1106-2 is in a conducting state, during time-period 2308-2, Ires may complete a half cycle before the corresponding charge Q2 reaches Qthd2. According to the disclosure herein, and with reference to Figures 22B1 - 22B3, during the same multiplexing cycle 2300 (marked as 2300' in Figures 22B1 - 22B3), an additional switching period, corresponding to switch 1106-2, may be added, to accumulate the residual charge from time-period 2308-2 in Figures 22A1. With reference to Figures 22B1-22B3, a switching period corresponding to switch 1106-2, shown as time-period 2320, may be added to multiplexing cycle 2300, in which a threshold charge Qthd2-2 is set to 2, which is the difference between Qthd2 and Q2. During time-period 2320, the resonant current, Ires, shown as waveform 2319, may be integrated to determine the charge, Q3, corresponding to Ires during time-period 2306. Thus, for example, the Qmpp corresponding to power source 110-2 may be extracted by MISO resonant converter 1100 during multiplexing cycle 2300. In Figures 22B1-22B3, since time-period 2320 is different from time-period 2304 (e.g., shorter), the time-period 2322 (e.g., corresponding to power source 110-3) may be longer than time-period 2304 in Figure 22A1, which may result in waveform 2321 of Ires.

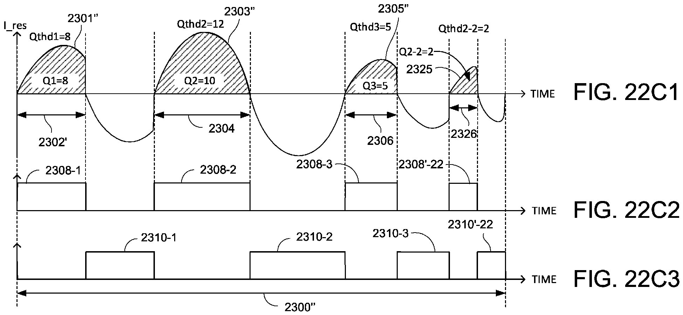

Figures 22B1-22B3 show one example of adding a switching period corresponding to switch 1106-2. According to the disclosure herein, a switching period 2326 corresponding to switch 1106-2, may be added after switching period 2306, as may be shown in Figures 22C1-22C3. During time-period 2326, the resonant current, Ires, shown as waveform 2325, may be integrated to determine the charge, Q3, corresponding to Ires during time-period 2306. In such a case, the duration of switching period 2326, resulting in waveform 2325 may be different from the duration of switching period 2320 (Figure 22B1).

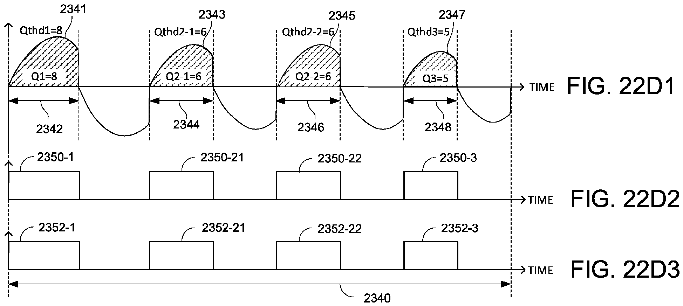

According to the disclosure herein, in case the accumulated charge does not reach the charge threshold, an additional switching period may be added to a subsequent multiplexing cycle. Figures 22D1-22D3, show waveforms during a multiplexing cycle 2340, which is subsequent to multiplexing cycle 2300. In multiplexing cycle 2340 to switching period 2344 and switching period 2346 correspond to switch 1106-2 where Qthd correspond to each switching period is 6 (Qthd2-1=6 and Qthd2-2=6). Thus, the total charge threshold for the corresponding power source (e.g., power source 110-2) may correspond to the Qmpp of the power source (Qmpp=12). During time periods 2344 and 2346, Ires, shown as waveforms 2343 may be integrated. According to the disclosure herein, switching period 2344 and switching period 2346 need not be subsequent in multiplexing cycle 2340.

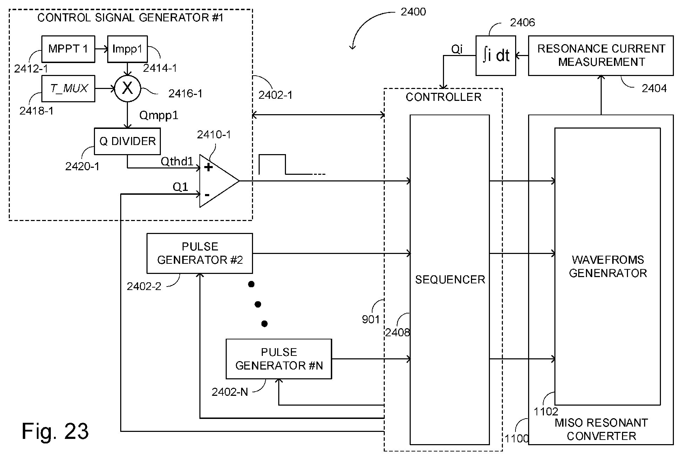

Reference is made to Figure 23 which shows an example of a control loop 2400 for performing MPPT using a MISO resonant converter (e.g., MISO resonant converter 1100) according to the disclosure herein, from a plurality of power sources (e.g., photovoltaic panels). Control loop 2400, comprises a plurality of control signal generators 2402-1, 2402-2, ..., 2402-N. In Figure 23, and for the clarity of the figure and the corresponding explanations, only the details of pulse generator 2402-1 are shown. However, it is understood that control signal generators 2402-2, ..., 2402-N may be similar. For ease of the explanations which follow with regards to control loop 2400, reference will be made to control signal generator 2402-1.

In control signal generator 2402-1, Comparator 2410-1 compares the charge Q1 relating to the energy extracted from the corresponding power source, with the threshold charge Qthd1, during the corresponding switching period. In cases in which Qthd1>Q1, pulse generator may generate a control signal for transitioning and/or maintaining the corresponding switch 1106-1 in a conducting state. In cases in which Qthd1<Q1, pulse generator may generate a control signal for transitioning and/or maintaining the corresponding switch 1106-1 in a non-conducting state.

When performing MPPT according to the disclosure herein, Q1 may be determined by using current integrator 2406, which integrates measurement of the resonant current, Ires, from resonant current measurements control block 2404. Using MPPT 1 control block 2412-1, an MPP of the corresponding power source (e.g., power source 1110-1) may be determined (e.g., using a perturb and observe algorithm or an incremental conductance algorithm). Using Impp1 2414-1 control block, an MPP current, Impp1, corresponding to the MPP of the power source (e.g., using a current versus voltage, IV, curve of the power source) may be determined. The Impp may be multiplied, using multiplier 2416-1, by the duration of the multiplexing cycle T_MUX from control block 2418-1. In cases in which Ires completes a half cycle before Q1 reaches Qthd, Q divider control block 2420-1 may add a time-period to the multiplexing cycle with a corresponding charge threshold as described above in conjunction with Figures 22B1-22B2, 22C1-22C2, and/or 22D1-22D3. Sequencer 1408 may control the sequence in which the power sources (e.g., power source 110-1, 110-2, ...., 110-N) may be connected to MISO resonant converter 1102.

As mentioned above, signal generators 2402-1, 2402-2, ..., 2402-N may generate a corresponding control signal for controlling the corresponding switch 1106-1, 1106-2, ..., 1106-N in multiplexer 1106 in a determined sequence. The determined sequence may be incremental or decremental (e.g., from signal generators 2402-1 to signal generator 2402-N or vice versa). The sequence may be based on the MPP of the corresponding power sources. For example, the sequence may be in the form of a pyramid of power where the signal generators corresponding to the power sources with the lowest corresponding MPP's are the first and the last signal generators in the sequence, and the signal generator corresponding to the power source with the highest corresponding MPP is at the middle of the sequence. For example, the sequence may be in the form of an inverted pyramid of the power, where the signal generators corresponding to the power sources with the highest corresponding MPP's are the first and the last signal generators in the sequence, and the signal generator corresponding to the power source with the lowest corresponding MPP is at the middle of the sequence. For example, the sequence may be in the form of a pyramid or an inverted pyramid of the charge thresholds (Qthd's)

As mentioned above, Impp is multiplied by T_MUX, where T_MUX is the duration of the multiplexing cycle. However, as described above in conjunction with Figures 22A1-22A2, 22B1-22B2, 22C1-22C2, and 22D1-22D2, the duration of the multiplexing cycle may change. According to the disclosure herein, T_MUX used to determine the Qmpp's may be the T_MUX of the previous multiplexing cycle. In cases in which the MPPT frequency is lower than the multiplexing frequency, using T_MUX of the previous multiplexing cycle may have a negligible effect on the accuracy of the power setpoint tracking (e.g., MPPT). In cases in which an additional switching cycle is added in the next multiplexing cycle, the duration of the next multiplexing cycle is known in advance. The effect of the accuracy of the power setpoint tracking may be that of the charge that was not accumulated during the current multiplexing cycle (Figure 22A1, during time period 2304, the Qthd=12, but accumulated charge Q2=10). According to another example, T_MUX may be set to a constant value.

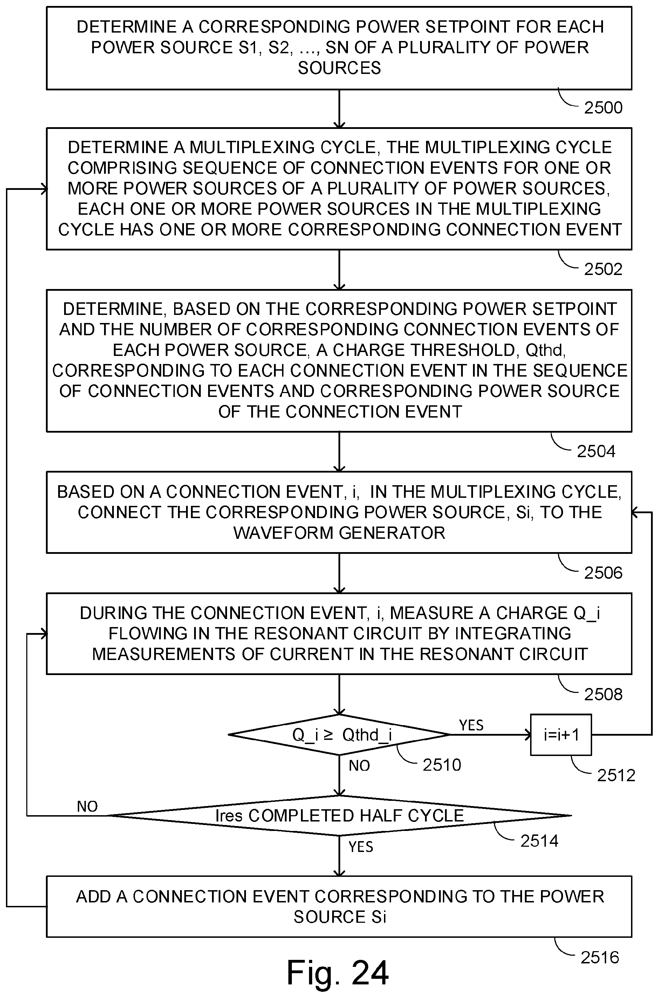

Reference is now made to Figure 24 which shows a method for power setpoint tracking (e.g., MPPT) with MISO resonant converter 1100, according to the disclosure herein. In step 2500 power device controller 901 may determine a corresponding power setpoint for each power source, Si, of a plurality of power sources S1, S2, ..., SN (e.g., power sources 1110-1, 1110-2, ..., 1110-N). In cases in which the power source is a photovoltaic panel, the power setpoint may be an MPP of the photovoltaic panel. The MPP of a photovoltaic panel may be determined using an MPPT algorithm (e.g., perturb and observe, incremental conductance). According to the disclosure herein, the power setpoint may be constant.

In step 2502, power device controller 901 may determine a multiplexing cycle (e.g., multiplexing cycle 2300, 2300', 2340 in Figures 22A2, 22B1-22B2, 22C1-22C2, and 22D1-22D2, and/or the multiplexing cycle shown in Figure 12A). The multiplexing cycle may comprise a sequence of connection events for one or more power sources of the plurality of power sources. Each of the one or more power sources in the multiplexing cycle may have one or more corresponding connection events. The sequence of connection events defining the multiplexing cycle may be incremental (e.g., from signal generator 2402-1 to signal generator 2402-N). The sequence of connection events defining the multiplexing cycle may be based on the determined power setpoints of the corresponding power sources. For example, the sequence may be in the form of a pyramid of power setpoints. For example, the sequence may be in the form of an inverted pyramid of the power setpoints.

In step 2504, a corresponding charge threshold, Qthd may be determined (e.g., by pulse generators 2402 in Figure 23), based on the corresponding power setpoint and the number of corresponding connection events of each power source in the multiplexing cycle. The charge threshold Qthd corresponds to a respective connection event in the sequence of connection events and to a corresponding power source. As described above in conjunction with Figures 22A2, 22B1-22B2, 22C1-22C2, and 22D1-22D2, Qthd may correspond to the power setpoint or a fraction of the power setpoint.

In step 2506, based on a connection event, i, in the multiplexing cycle, power device controller 901 may control a corresponding switch 1106-i, to connect the corresponding power source, 110-i, to waveform generator 1106.

In step 1508, a charge, Q_i, flowing through resonant circuit 1104 may be measured during the connection event, i, using measurements of resonance current, Ires (e.g., from sensor(s) 902), and using current integrator 2406,.

In step 2510, power device controller 901 may determine if Q_i is larger or equal to Qthd_i (e.g., using comparator 2410). In cases in which Q_i is larger or equal to Qthd_i, the method may proceed to step 2512. In cases in which Q_i is smaller than Qthd_i, the method may proceed to step 2514.

In step 2512, power device controller 901 may proceed to the next connection event, i+1, in the multiplexing cycle. From step 2512 the method returns to step 2506.

In step 2514, power device controller 901 may determine if the resonant current, Ires, completed a half cycle. For example, in Figure 22A1, Ires completed a half cycle during time-period 2304. In cases in which Ires completed a half cycle, the method proceeds to step 2516. In cases in which Ires did not completed a half cycle, the method returns to step 2508.

In step 2516, a connection event, corresponding to the power source, Si, may be added by power device controller 901 may be added to a multiplexing cycle. The connection event may be added, for example, to the current multiplexing cycle. The connection event may be added, for example, to the next multiplexing cycle. The method may return to step 1502.

Described above in conjunction with Figures 22A2, 22B1-22B2, 22C1-22C2, and 22D1-22D2, 23 and 24 is power setpoint tracking which may use measurements of charge and in which a connection event may be added to a multiplexing cycle. According to the disclosure herein, in case the an MPP charge, Qmpp1, is below a threshold, a connection event may be skipped in the multiplexing cycle, and Qmpp may be added to the next multiplexing cycle.

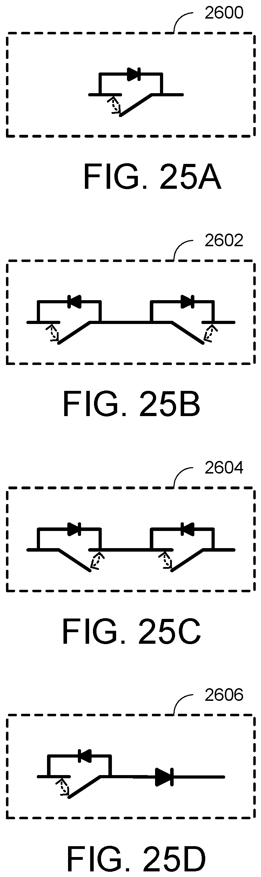

Figures 25A-25D shows various examples 2600, 2602, 1604, and 1606 of switches which may be used as switches 1106-1, 1106-2, ..., 1106-N and complementary switch 1108.

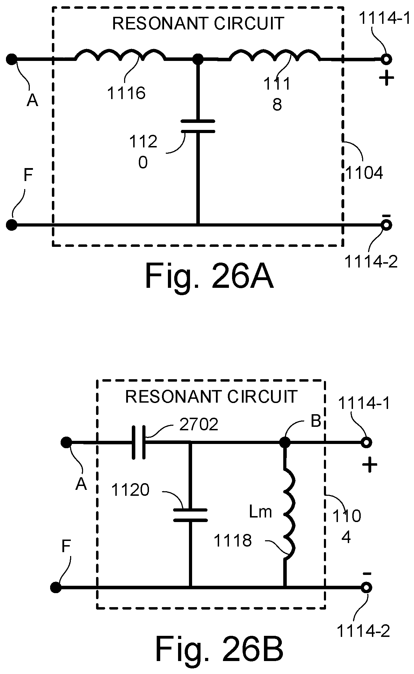

The description above in conjunction with Figures 11B-11F showed an example of resonant circuit 1104. A MISO resonant converter according to the disclosure is not limited to the example shown in Figures 11B-11F. Other resonant circuit configurations may be used. Reference is made to Figures 26A and 26B which show examples of other resonant circuit configurations which may be used in a MISO resonant converter according to the disclosure herein.

One or more aspects described herein may be embodied in computer-usable data and computer-executable instructions, for example, as in one or more program modules, executed by one or more computers or other devices. Generally, program modules may include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Hereinafter, various characteristics will be highlighted in a set of numbered clauses or paragraphs. These characteristics are not to be interpreted as being limiting, but are provided merely as a highlighting of some characteristics as described herein, without suggesting a particular order of importance or relevancy of such characteristics.
Clause 1. An apparatus comprising:
   a power converter;
   a multiplexer comprising a plurality of switches;
   a controller configured to:
      control the multiplexer to alternately connect a first power source and a second power source to the power converter,
      wherein the first power source comprises a first set of at least one power generator;
      wherein the second power source comprises a second set of at least one power generator, and at least one alternating power generator;
      alternately determine a first Maximum Power Point (MPP) corresponding to the first power source and a second MPP corresponding to the second power source;
      control the power converter to alternately:
         draw power, based on the first MPP, from the first power source; and
         draw power, based on the second MPP, from the second power source.
Clause 2. The apparatus of clause 1, wherein the controller is further configured to determine a first total combined power generated by the first power source and the second power source based on the first MPP and the second MPP.
Clause 3. The apparatus of clause 2, wherein the controller is further configured to:
   control the multiplexer to alternately connect, to the power converter, a third power source, and a fourth power source,
      wherein the third power source comprises the first set of at least one power generator and the at least one alternating power generator,
      wherein the fourth power source comprises the second set of at least one power generator;
   alternately determine a third MPP corresponding to the third power source and a fourth MPP corresponding to the fourth power source; and
   determine a second total combined power generated by the third power source and the fourth power source based on the third MPP and the fourth MPP,
   wherein, responsive to the first total combined power being higher than the second total combined power, the controller is configured to subsequently alternately connect the first power source and the second power source, to the power converter,
   wherein, responsive to the first total combined power being lower than the second total combined power, the controller is configured to subsequently alternately connect the third power source and the fourth power source to the power converter.
Clause 4. The apparatus of any one of clauses 1-3, wherein the controller is further configured to:
   control the multiplexer to connect the at least one alternating power generator to the power converter;
   determine a third MPP corresponding to the at least one alternating power generator;
   control the multiplexer to connect the second set of at least one power generator to the power converter; and
   determine a fourth MPP corresponding to the second set of at least one power generator.
Clause 5. The apparatus of clause 4, wherein the controller is further configured to:
   control the multiplexer to alternately connect to the power converter, based on an MPP voltage of the alternating power generator, a third power source and a fourth power source,
   wherein the third power source comprises the at least one alternating power generator, and one of the first set of at least one first power generator or the second set of at least one second power generator, and
   wherein the fourth power source comprises the other one of the first set of at least one first power generator or the second set at least one power generator.
Clause 6. The apparatus of clause 5, wherein the controller controls the multiplexer to connect the third power source based on:
   a first difference between the MPP voltage of the alternating power generator and an MPP voltage of the first power source; and
   a second difference between the MPP voltage of the alternating power generator and an MPP voltage of the second set of at least one power generator.
Clause 7- The apparatus of clause 6, wherein the controller controls the multiplexer to connect the third power source based on at least one of:
   the smallest of the first difference and the second difference;
   a sign of the first difference and a sign of the second difference; or
   a combination of:
      the smallest of the first difference and the second difference; and
      a sign of the first difference and a sign of the second difference.
Clause 8. The apparatus of any one of clauses 1-7, wherein the controller is further configured to control the multiplexer to alternately connect to the power converter, based on an MPP voltage of the alternating power generator, an MPP voltage of the at first power source, and an MPP voltage of the second set of at least one power generator, a first power source, a second power source, and a third power source, wherein the first power source comprising the first set of at least one power generator, the second power source comprises the second set of at least one power generator, and the third power source comprises the at least one alternating power generator.
Clause 9. The apparatus of any one of clauses 1-8, wherein the controller is further configured to determine, based on a number of power sources, a switching frequency form the power converter.
Clause 10. The apparatus of any one of clauses 1-9, wherein a number of power generators is J*I, where J and I are each an integer greater than or equal to 1, wherein the multiplexer comprises:
   J first-dimension terminals;
   I second-dimension terminals;
   J first-polarity switches, each coupled between a respective first-polarity terminal and a first-polarity converter input of the power converter; and
   I second-polarity switches, each coupled between a respective second-polarity terminal and a second-polarity converter input of the power converter,
   wherein each of the J first-dimension terminals is coupled to N different first-polarity terminals of I different power generators such that each of the M*N power generators has a first-polarity terminal coupled to one of the M first-dimension terminals, and wherein each of the J second-dimension terminals is coupled to J different second-polarity terminals of I different power generators, such that each of the J*I power generators has a second-polarity terminal coupled to one of the I second-dimension terminals.
Clause 11. The apparatus of clause 10, wherein the controller is further configured to control each of the J first-polarity switches and each of the I second-polarity switches between a conducting state and a non-conducting state to alternately connect each of the power sources to the power converter.
Clause 12. The apparatus of any one of clauses 1-11, wherein the first set of at least one power generator, the second set of at least one power generator, and the alternating power generator are each one of:
   a photovoltaic cell;
   a photovoltaic substring;
   a photovoltaic module;
   a battery cell;
   a battery pack; or
   a battery.
Clause 13. The apparatus of any one of clauses 1-12, wherein each of the plurality of switches is coupled to a first-polarity converter input of the power converter, and configured to be coupled to a respective first-polarity terminal of a respective power generator.
Clause 14. The apparatus of clause 13, wherein a second-polarity converter input is configured to be coupled to second-polarity terminals of the power generators.
Clause 15. A method comprising:
   connecting, alternately, a first power source and a second power source to a power converter, wherein the first power source comprises a first set of at least one power generator, and wherein the second power source comprises a second set of at least one power generator, and at least one alternating power generator;
   determining, alternately, a first Maximum Power Point (MPP) corresponding to the first power source and a second MPP corresponding to the second power source; and
   drawing power, alternately, from the first power source based on the first MPP, and from the second power source, based on the second MPP.
Clause 16. The method of clause 15, further comprising, determining a first total combined power generated by the first power source and the second power source based on the first MPP and the second MPP.
Clause 17. The method of clause 15, further comprising:
   connecting, alternately, a third power source, and a fourth power source,
   wherein the third power source comprises the first set of at least one power generator and the at least one alternating power generator,
   wherein the fourth power source comprises the second set of at least one power generator,
   determining, alternately, a third MPP corresponding to the third power source and a fourth MPP corresponding to the fourth power source; and
   determining a second total combined power generated by the third power source and the fourth power source based on the third MPP and the fourth MPP;
   responsive to the first total combined power being higher than the second total combined power, alternately connecting the first power source and the second power source, to the power converter; and
   responsive to the first total combined power being lower than the second total combined power, alternately connecting the third power source and the fourth power source to the power converter.
Clause 18. The method of any one of clauses 15-17, further comprising:
   connecting the at least one alternating power generator to the power converter;
   determining a third MPP corresponding to the at least one alternating power generator;
   connecting the second set of at least one power generator to the power converter; and
   determining a fourth MPP corresponding to the second set of at least one power generator.
Clause 19. The method of clause 18, further comprising:
   connecting, alternately and to the power converter, based on an MPP voltage of the alternating power generator, a third power source and a fourth power source,
   wherein the third power source comprises the at least one alternating power generator, and one of the first set of at least one first power generator or the second set of at least one second power generator, and
   and wherein the fourth power source comprises the other one of the first set of at least one first power generator or the second set at least one power generator.
Clause 20. The method of clause 19, further comprising connecting the third power source based on:
   a first difference between the MPP voltage of the alternating power generator and an MPP voltage of the first power source; and
   a second difference between the MPP voltage of the alternating power generator and an MPP voltage of the second set of at least one power generator.
Clause 21. The method of clause 20, wherein the connecting of the third power is based on at least one of:
   the smallest of the first difference and the second difference;
   a sign of the first difference and a sign of the second difference; or
   a combination of:
      the smallest of the first difference and the second difference; and
      a sign of the first difference and a sign of the second difference.
Clause 22. The method of any one of clauses 18-21, further comprising, connecting, alternately, to the power converter and based on an MPP voltage of the alternating power generator, an MPP voltage of the at first power source, and an MPP voltage of the second set of at least one power generator, a first power source, a second power source, and a third power source, wherein the first power source comprises the first set of at least one power generator, the second power source comprises the second set of at least one power generator, and the third power source comprises the at least one alternating power generator.
Clause 23. The method of any one of clauses 15-22, further comprising, determining, based on a number of power sources, a switching frequency from the power converter.
Clause 24. A method comprising:
   connecting a first power source to a power converter, the first power source including a first set of at least one power generator;
   determining a first Maximum Power Point (MPP) corresponding to a power produced by the first power source;
   connecting a second power source to the power converter, the second power source including a second set of at least one power generator and at least one alternating power generator;
   determining a second MPP corresponding to a power produced by the second power source;
   determining a first total combine power based on the first MPP and the second MPP
   connecting a third power source to a power converter, the third power source includes the first set of at least one power generator and the at least one alternating power generator;
   determining a third MPP corresponding to a power produced by the third power source;
   connecting a fourth power source to a power converter, the fourth power source includes the second set of at least one power generator;
   determining a fourth MPP corresponding to a power produced by the fourth power source;
   determining a second total combined power based on the first MPP and the second MPP;
   connecting, alternately, the first power source and the second power source to the power converter based on the first total combined power being larger than the second total combine power; and
   connecting, alternately, the third power source and the fourth power source to the power converter based on the first total combined power being smaller than the second total combine power.
Clause 25. A method comprising:
   connecting a first power source to a power converter, the first power source comprising a first set of at least one power generator;
   determining a first Maximum Power Point (MPP) voltage corresponding to a first maximum power produced by the first power source;
   connecting a second power source to the power converter, the second power source comprising a second set of at least one power generator;
   determining a second MPP voltage corresponding to a second maximum power produced by the second power source;
   connecting at least one alternating power generator to the power converter; and
   determining a third MPP voltage corresponding to a maximum power produced by the at least one alternating power generator;
   connecting, alternately, to the power converter and based on the third MPP voltage and the first MPP voltage being equal, a third power source and the second power source, wherein the third power source comprises the first set of power generators and the alternating power generator;
   connecting, alternately, to the power converter and based on the third MPP voltage and the second MPP voltage being equal, the first power source and a fourth power source, wherein the fourth power source comprises the second set of power generators and the at least one alternating power generator;
   connecting, alternately and based on the first MPP voltage, the second MPP voltage, and the third MPP voltage being different, to the power converter, the first power source, the second power source, and the at least one alternating power generator.
Clause 26. The method of clause 25, further comprising determining a switching frequency for the power converter based on a number of power sources.
Clause 27. A module comprising:
   a first power source comprising a first set of at least one power generator ;
   a second power source comprising a second set of at least one power generator and at least one alternating power generator; and
   an apparatus comprising:
      a power converter;
      a multiplexer; and
      a controller configured to:
         control the multiplexer to alternately connect the first power source and the second power source to the power converter;
         determine a first Maximum Power Point (MPP) corresponding to the first power source and a second MPP corresponding to the second power source, and
         control the power converter to alternately draw power, based on the first MPP, from the first power source and draw power, based on the second MPP, from the second power source.
Clause 28. An apparatus comprising:
   a power converter;
   a multiplexer comprising a plurality of switches; and
      a controller configured to:
      control the multiplexer to alternately connect a first power source and a second power source to the power converter,
      wherein the first power source comprises a first set of N power generator, where N is an integer equal or larger than 2;
      wherein the second power source comprises a second set M power generator, where M is an integer equal or larger than 2;
      alternately determine a first Maximum Power Point (MPP) corresponding to the first power source and a second MPP corresponding to the second power source, and
      control the power converter to alternately:
         draw power, based on the first MPP, from the first power source, and
         draw power, based on the second MPP, from the second power source.
Clause 29. The apparatus of clause 27, wherein the controller is further configured to determine a first total combined power generated by the first power source and the second power source based on the first MPP and the second MPP.
Clause 30. The apparatus of clause 28, wherein the controller is configured to:
   control the multiplexer to alternately connect, to the power converter, a third power source, and a fourth power source:
      wherein the third power source comprises M+1 power generators, and
      wherein the fourth power source comprises N-1 power generators,
   alternately determine a third MPP corresponding to the third power source and a fourth MPP corresponding to the fourth power source; and
   determine a second total combined power generated by the third power source and the fourth power source based on the third MPP and the fourth MPP,
   wherein, based on the first total combined power being higher than the second total combined power, the controller is configured to subsequently alternately connect the first power source and the second power source, to the power converter, and
   wherein, based on the first total combined power being lower than the second total combined power, the controller is configured to subsequently alternately connect the third power source and the fourth power source to the power converter.
Clause 31. The apparatus of any one of clauses 27-29, wherein the controller is further configured to:
   control the multiplexer to connect the at least one generator from the second set of M power generators to the power converter;
   determine a third MPP corresponding to the at least one power generator;
   control the multiplexer to connect the M-1 power generator from the second set of power generators to the power converter; and
   determine a fourth MPP corresponding to the second set of at least one power generator.
Clause 32. The apparatus of clause 31, wherein the controller is further configured to:
   control the multiplexer to alternately connect to the power converter, based a MPP voltage of the at least one power generator, a third power source and a fourth power source,
   wherein the third power source comprises the at least one power generator, and one of the first set of at least one first power generator, or the M-1 power generators from the second set of power generators, and
   and wherein the fourth power source comprises the other one of the first set of at power generators or the M-1 power generators of the second set of power generators.
Clause 33. The apparatus of clause 32, wherein the controller controls the multiplexer to connect the third power source based on:
   a first difference between the MPP voltage of the at least one power generator and an MPP voltage of the first power source; and
   a second difference between the MPP voltage of the at least one power generator and an MPP voltage of the M-1 power generator of the second set of power generators.
Clause 34. The apparatus of clause 33, wherein the controller controls the multiplexer to connect the third power based on at least one of:
   the smallest of the first difference and the second difference;
   a sign of the first difference and a sign of the second difference; or
   a combination of:
      the smallest of the first difference and the second difference; and
      a sign of the first difference and a sign of the second difference.
Clause 35. The apparatus of any one of clauses 31-34, wherein the controller is further configured to control the multiplexer to alternately connect to the power converter, based on an MPP voltage of the at least one power generator, an MPP voltage of the at first power source, and an MPP voltage of the M-1 power generators of the second set of power generators, a first power source, a second power source, and a third power source, wherein the first power source comprises the first set of at least one power generator, the second power source comprises the M-1 power generators or the second set of power generators, and the third power source comprises the at least one power generator.
Clause 36. An apparatus comprising:
   a power converter;
   a multiplexer comprising a plurality of switches;
   a controller configured to:
      control the multiplexer to alternately connect a first power source and a power generator to the power converter,
         wherein the first power source comprises a first set of N power generators, where N is an integer equal or larger than one;
      alternately determine a first Maximum Power Point (MPP) corresponding to the first power source and a second MPP corresponding to the power generator;
      based on the first MPP and the second MPP, control the multiplexer to:
         alternately connect the first power source and the power generator to the power converter; or
         connect the both the first power source and the power generator to the power converter.
Clause 37. An apparatus comprising: a resonant circuit; a waveforms generator, coupled to the resonant circuit and configured to be coupled to a plurality of power sources, wherein the waveforms generator comprises: a multiplexer; and a complementary switch; and a controller configured to: determine, based on one or more electrical parameters, a sequence of separate time-periods, wherein each time-period of the sequence of separate time-periods corresponds to an associated power source of the plurality of power sources; control the multiplexer and the complementary switch, during the sequence of separate time-periods, to generate a corresponding sequence of waveforms; and wherein each waveform of the corresponding sequence of waveforms corresponds to a power source of the plurality of power sources.
Clause 38. The apparatus of any one of clauses 35 and 36, wherein the multiplexer comprises a plurality of switches, connected at a first connection point (A), wherein each switch of the plurality of switches is configured to be connected to a corresponding power source of the plurality of power sources, for alternately connecting and disconnecting the corresponding power source to the resonant circuit.
Clause 39. The apparatus of clause 36 wherein the controller controls the multiplexer and the complementary switch by: switching, during a time-interval within a corresponding time-period of the sequence of separate time-periods, a corresponding switch of the plurality of switches, to a conducting state; switching, during the time-interval within the corresponding time-period, the complementary switch to a non-conducting state; switching, during a complementary time-interval within the corresponding time-period, the corresponding switch of the plurality of switches, to a non-conducting state; and switching, during the complementary time-interval, within the corresponding time-period, the complementary switch to a conducting state.
Clause 40. The apparatus of clause 36, wherein the controller controls the multiplexer and the complementary switch by: modulating, during a time-interval within a corresponding time-period, of the sequence of separate time-periods a corresponding switch of the plurality of switches between a conducting state and a non-conducting state; and modulating, during the time-interval, the complementary switch between a non-conducting state and a conducting state; switching, during a complementary time-interval within the corresponding time-period, the corresponding switch of the plurality of switches, to a non-conducting state; and switching, during the complementary time-interval, the complementary switch to a conducting state.
Clause 41. The apparatus of clause 38, wherein a duration of each time-period in the sequence of separate time-periods is equal, and wherein the controller modulates one or more of the plurality of switches, between a conducting state and a non-conducting state at a harmonic frequency corresponding to the duration of each time-period.
Clause 42. The apparatus of clause 34, wherein the controller controls the multiplexer and the complementary switch by: switching during a first time-interval within a first corresponding time-period a corresponding switch to a conducting state; switching during the first time-interval the complementary switch to a non-conducting state; switching during the first time-interval the corresponding switch to a non-conducting state; switching during the first complementary time-interval the complementary switch to a conducting state; and switching during a second corresponding time-period the corresponding switch and the complementary switch to a conducting state.
Clause 43. The apparatus of clause 36, wherein the controller controls the multiplexer and the complementary switch by: switching, during a first time-interval within a corresponding time-period, and during a second time-interval within the corresponding time-period, a corresponding switch of the plurality of switches to a conducting state; and switching, during a first complementary time-interval within the corresponding time-period and during a second complementary time-interval within the corresponding time-period, the complementary switch to a non-conducting state, wherein the first time-interval and the second time-interval are mutually exclusive in time.
Clause 44. The apparatus of any one of clauses 35-41, wherein the resonant circuit comprises an inductor connected between a third connection point and a fourth connection point.
Clause 45. The apparatus of clause 42, wherein the resonant circuit further comprises at least one capacitor.
Clause 46. The apparatus of clause 43 wherein the resonant circuit further comprises a second inductor.
Clause 47. The apparatus of clause 42, wherein the resonant circuit further comprises at least two capacitors.
Clause 48. The apparatus of any one of clauses 35-45, wherein the resonant circuit comprises a transformer, wherein the transformer comprises a primary winding connected between a third connection point and a fourth connection point; and wherein the transformer comprises a secondary winding connected between a fourth connection point and a fifth connection point.
Clause 49. The apparatus of clause 46, wherein the resonant circuit further comprises at least one capacitor.
Clause 50. The apparatus of clause 47 wherein the resonant circuit further comprises a second inductor.
Clause 51. The apparatus of clause 46, wherein the secondary winding is a split winding.
Clause 52. The apparatus of clause 46, wherein a cycloconverter is coupled to the secondary windings of the transformer.
Clause 53. The apparatus of any one of clauses 35-50, further comprising a rectifier coupled to the resonant circuit.
Clause 54. The apparatus of any one of clauses 35-51, wherein the one or more electrical parameters comprises power, wherein the apparatus further comprise sensors configured to measure a corresponding power from each power source of the plurality of power sources, and wherein the controller is configured to, based on the measured corresponding power from a power source of the plurality of power source being different than a corresponding power setpoint, adjust a previous time-period in the sequence of time-periods.
Clause 55. The apparatus of clause 52, wherein the controller is configured to, based on the measured corresponding power being larger than the corresponding power setpoint, decrease a previous time-period in the sequence separate of time-periods, wherein the controller is configured to, based on a measured corresponding power being lower than the corresponding power setpoint, decrease a previous time-period in the sequence separate of time-periods.
Clause 56. The apparatus of any one clauses 35-53, wherein the one or more electrical parameters comprises an output voltage, wherein the apparatus further comprise sensors configured to measure the output voltage, and wherein the controller is configured to, based on a measured output voltage being different from a voltage setpoint, adjust one of more of the time-periods in the sequence of time-periods.
Clause 57. The apparatus of clause 54, wherein the controller is configured to, based on the measured output voltage being larger than a voltage setpoint, decrease one or more time-periods in the sequence of separate time-periods, wherein the controller is configured to, based on the measured output voltage being smaller than a voltage setpoint, increase one or more time-periods in the sequence of separate time-periods.
Clause 58. The apparatus of any one of clauses 35-55, wherein the waveforms generator is configured to be coupled to a second plurality of power sources, wherein the controller is further configured to: determine, based on a second one or more electrical parameters, a second sequence of separate time-periods, wherein each time-period of the second sequence of separate time-periods corresponds to an associated power source of the second plurality of power sources; and control the multiplexer and the complementary switch, during the second sequence of separate time-periods, to generate a corresponding second sequence of waveforms, wherein each waveform of the corresponding second sequence of waveforms corresponds to a power source of the second plurality of power sources, and wherein the second sequence of separate time-periods is subsequent to the sequence of time-periods.
Clause 59. The apparatus of any one of clauses 35-56, wherein the controller is configured to: determine, a second sequence of separate time-periods, wherein each time-period of the second sequence of separate time-periods corresponds to an associated power source of the plurality of power sources, wherein a number of separate time-periods in the second sequence of separate time-periods is smaller or equal to a number of time-periods in the sequence of separate time-periods; and control the multiplexer and the complementary switch, during the second sequence of separate time-periods, to generate a corresponding second sequence of waveforms, wherein each waveform of the corresponding second sequence of waveforms corresponds to a power source of the plurality of power sources.
Clause 60. A method comprising: determining, a value for one or more electrical parameters; determining, based on one or more electrical parameters, a sequence of separate time-periods, wherein each time-period of the sequence of separate time-periods corresponds to an associated power source of a plurality of power sources; and generating, during the sequence of separate time-periods, a corresponding sequence of waveforms, where each waveform of the corresponding sequence of waveforms corresponds to a power source of the plurality of power source.
Clause 61. The method of clause 60, wherein the one or more electrical parameters comprises power, wherein the method further comprises: measuring, using sensors, a corresponding power from each power source of the plurality of power sources, and adjusting, based on a measured corresponding power from a power source of the plurality of power sources being different than a corresponding power setpoint, a previous time-period in the sequence of time-periods.
Clause 62. method of clause 61, wherein adjusting comprises: decreasing, based on the measured corresponding power being larger than the corresponding power setpoint, a previous time-period in the sequence of time-periods; and increasing, based on the measured corresponding power being lower than the corresponding power setpoint, the previous time-period in the sequence of time-periods.
Clause 63. The method of any one of clauses 60-62, wherein the one or more electrical parameters comprises an output voltage, wherein the method comprises: measuring, using a sensor, the output voltage; and adjusting, based on a measured output voltage being different from a voltage setpoint, one of more of the time-periods in the sequence of time-periods.
Clause 64. The apparatus of clause 63, the adjusting comprises: decreasing, based on the measured output voltage being larger than a voltage setpoint, one or more time-periods in the sequence of time-periods; and increasing, based on the measured output voltage being smaller than a voltage setpoint, one or more time-periods in the sequence of time-periods.
Clause 65. The method of any one of clauses 60-64, further comprising: determining, for each power source of a second plurality of power sources, a corresponding value for one or more electrical parameters; determining, based on one or more electrical parameters, a second sequence of separate time-periods, wherein each time-period of the second sequence of separate time-periods corresponds to an associated power source of the second plurality of power sources; and generating, during the second sequence of separate time-periods, a corresponding second sequence of waveforms, where each waveform of the corresponding second sequence of waveforms corresponds to a power source of the second plurality of power source, wherein the second sequence of separate time-periods is subsequent to the sequence of time-periods.
Clause 66. The method of any one of clauses 60-65, wherein during a time-period in the sequence of separate time-periods, generating for the associated power source of the time-period, a corresponding waveform having a frequency corresponding to a harmonic of a fundamental frequency corresponding to the time period.
Clause 67. The method of any one of clauses 60-66, wherein the generating comprises modulating a switch during a time-period in the sequence of separate time-periods.
Clause 68. The method of any one of clauses 60-67, further comprising: determining, a second sequence of separate time-periods, wherein each time-period of the second sequence of separate time-periods corresponds to an associated power source of the plurality of power sources, wherein a number of separate time-periods in the second sequence of separate time-periods is smaller or equal to a number of time-periods in the sequence of separate time-periods; and generating, during the second sequence of separate time-periods, a corresponding second sequence of waveforms, wherein each waveform of the corresponding second sequence of waveforms corresponds to a power source of the plurality of power sources, and wherein the second sequence of separate time-periods is subsequent to the sequence of time-periods.
Clause 69. The method of any one of clauses 60-68, wherein the one or more electrical parameters comprise a power setpoint for each power source of the plurality of power sources, wherein the method further comprises: measuring, for each power source of the plurality of power sources, a power level; increasing, in response to a power setpoint corresponding to the power source being larger than a measured power level corresponding to the power source, a time-period previous to a time-period associated with a power source of the plurality of power source; and decreasing a time-period previous to a time-period associated with a power source of the plurality of power source, in response to a power setpoint corresponding to the power source being smaller than the measure power level corresponding to the power source.
Clause 70. The method of any one of clauses 60-69, wherein the one or more electrical parameters comprise an output voltage setpoint, wherein the method further comprises: measuring an output voltage; increasing, in response to the measured output voltage being smaller than the output voltage set point, a time-period corresponding to at least one of the power source of the plurality of power sources; and decreasing, in response to the measured output voltage being larger than the output voltage set point, a time-period corresponding to at least one of the power source of the plurality of power sources.
Clause 71. The method of any one of clauses 60-70, further comprising: measuring a power level of a power source of the plurality of power sources; determining a change in the power level relative to a previous power measurement; adjusting, based on the change in the power level, a time-period associated with the power source; responsive to a duration of the modified time-period being larger than a maximum duration: determining, a second sequence of separate time-periods, wherein each time-period of the second sequence of separate time-periods corresponds to an associated power source of the plurality of power sources, wherein a number of separate time-periods in the second sequence of separate time-periods is smaller or equal to a number of time-periods in the sequence of separate time-periods; generating, during the second sequence of separate time-periods, a corresponding second sequence of waveforms, wherein each waveform of the corresponding second sequence of waveforms corresponds to a power source of the plurality of power sources.
Clause 72. A method, comprising: receiving, by a computing device, one or more electrical parameters associated with a plurality of switches, wherein each switch of the plurality of switches is configured with; two or more electrical states comprising a conducting state and a non-conducting state; a first electrical connection in electrical contact with a common electrical point; and a second electrical connection in electrical contact with an associated electrical point of a plurality of independent and isolated electrical connection points; determining, based on one or more of the one or more electrical parameters and for each switch, a corresponding separate time-period, associated with each switch of the plurality of switches; switching, during each corresponding separate time-period, an associated switch of the plurality of switches to the conducting state; and switching, during each corresponding separate time-period a complementary switch of the plurality of switches to the non-conducting state.
Clause 73. An apparatus comprising: a resonant circuit; a waveforms generator, coupled to the resonant circuit and configured to be coupled to a plurality of power sources, wherein the waveforms generator comprises: a multiplexer; and a complementary switch; and a controller configured to: determine, based on one or more electrical parameters, a sequence of connection events, wherein each connection event of the sequence of connection events corresponds to an associated power source of the plurality of power sources; and control the multiplexer and the complementary switch based on the sequence of connection events, to generate a corresponding sequence of waveforms wherein: each waveform of the corresponding sequence of waveforms corresponds to a power source of the plurality of power sources, and the duration of each waveform in the sequence of waveforms is based on a power setpoint corresponding to the corresponding power source.
Clause 74. The apparatus of clause 73, wherein the controller is configured to add a connection event corresponding to a power source of the plurality of power source if a measured charge, flowing through the resonant circuit, is equal to or larger than a threshold charge.
Clause 75. The apparatus of clause 74, wherein the controller is configured to determine a measured charge by integrating measurements of current flowing through the resonant circuit.
Clause 76. The apparatus of clause 75, wherein the controller is configured to determine the charge threshold based on a power setpoint charge, associated with the power source of the plurality of power sources, and the number of corresponding connection events in the sequence of connection events.
Clause 77. The apparatus of any one of clauses 73-76, wherein during a connection event corresponding to a power source the power controller is configured to: transition, at a start of the connection event, a switch in the multiplexer corresponding to the power source to a conducting state, and transition the complementary switch to a non-conducting state; measure the current following through the resonant circuit to determine a measured charge; and transition the switch in the multiplexer corresponding to the power source to a non-conducting state, and transition the complementary switch to a conducting state when: the measured charge is equal or larger than a charge threshold; or the current through the resonant circuit completes a half cycle.
Clause 78. A method comprising: determining, by a power device controller, a corresponding power setpoint for each power source of a plurality of power source; determining, a multiplexing cycle comprising sequence of connection events for one or more power sources of the plurality of power sources, wherein each of the one or more power sources has one or more corresponding connection event; determining, based on the corresponding power setpoint and the number of corresponding connection events of each power source in the multiplexing cycle, a corresponding charge threshold; connecting, by a multiplexer and based on a connection event in the multiplexing cycle, a corresponding power source to a waveform generator; and adding, by the power device controller, a connection event corresponding to the power source in cases in which the measured charge is equal to or greater than a threshold charge and is based on the resonant current completing a half cycle.
Clause 79. The method of clause 78, wherein the connection event is added to a current multiplexing cycle.
Clause 80. The method of any one of clauses 78-79, wherein the connection event is added to a next multiplexing cycle.
Clause 81. The method of any one of clauses 78-80, wherein the sequence of connection events is incremental.
Clause 82. The method of any one of clauses 78-81, wherein sequence of connection events is based on the determined power setpoints.
Clause 83. The method of any one of clauses 78-82, further comprising: measuring, using a sensor associated with the power device controller, a resonant current; and calculating, based on the resonant current and using a current integrator, a total charge.

## Claims

1. An apparatus comprising:
a resonant circuit;
a waveforms generator, coupled to the resonant circuit and configured to be coupled to a plurality of power sources, wherein the waveforms generator comprises:
a multiplexer; and
a complementary switch; and
a controller configured to:
determine, based on one or more electrical parameters, a sequence of connection events, wherein each connection event of the sequence of connection events corresponds to an associated power source of the plurality of power sources; and
control the multiplexer and the complementary switch based on the sequence of connection events, to generate a corresponding sequence of waveforms wherein:
each waveform of the corresponding sequence of waveforms corresponds to a power source of the plurality of power sources, and
a duration of each waveform in the sequence of waveforms is based on a power setpoint corresponding to the corresponding power source.

2. The apparatus of claim 1, wherein the controller is configured to add a connection event corresponding to a power source of the plurality of power sources if a measured charge, flowing through the resonant circuit, is equal to or larger than a threshold charge.

3. The apparatus of claim 2, wherein the connection event is added to a current multiplexing cycle.

4. The apparatus of any one of claims 2-3, wherein the connection event is added to a next multiplexing cycle.

5. The apparatus of any one of claims 2-4, wherein the controller is configured to determine a measured charge by integrating measurements of current flowing through the resonant circuit.

6. The apparatus of any one of claim 2-5, wherein the controller is configured to:
determine a power set point for each power source of the plurality of power sources; and
determine, based on the corresponding power setpoint and the number of corresponding connection events of each power source, a corresponding charge threshold (Qthd) for each power source of the plurality of power sources.

7. The apparatus of any one of claims 2-6, wherein during a connection event corresponding to a power source the power controller is configured to:
transition, at a start of the connection event, a switch in the multiplexer corresponding to the power source to a conducting state, and transition the complementary switch to a non-conducting state;
measure a current flowing through the resonant circuit to determine a measured charge; and
transition the switch in the multiplexer corresponding to the power source to a non-conducting state, and transition the complementary switch to a conducting state if:
the measured charge is equal or larger than the charge threshold; or
the current through the resonant circuit completes a half cycle.

8. The apparatus of any one of claims 1-7, wherein the multiplexer comprises a plurality of switches, connected at a first connection point (A),
wherein each switch of the plurality of switches is configured to be connected to a corresponding power source of the plurality of power sources, for alternately connecting and disconnecting the corresponding power source to the resonant circuit.

9. The apparatus of any one of claims claim 1-8, wherein the sequence of connection events is incremental.

10. The apparatus of any one of claims 1-9, wherein the sequence of connection events is based on the determined power setpoints.

11. A method comprising:
determining, by a power device controller, a corresponding power setpoint for each power source of a plurality of power source;
determining, a multiplexing cycle comprising sequence of connection events for one or more power sources of the plurality of power sources, wherein each of the one or more power sources has one or more corresponding connection event;
determining, based on the corresponding power setpoint and the number of corresponding connection events of each power source in the multiplexing cycle, a corresponding charge threshold (Qthd);
connecting, by a multiplexer and based on a connection event in the multiplexing cycle, a corresponding power source to a waveform generator; and
adding, by the power device controller, a connection event corresponding to the power source in cases in which a measured charge is equal to or greater than a threshold charge and is based on a resonant current completing a half cycle.

12. The method of claim 11, wherein the connection event is added to a current multiplexing cycle.

13. The method of any one of claims 11-12, wherein the connection event is added to a next multiplexing cycle.

14. The method of any one of claims 11-13, wherein sequence of connection events is based on the determined power setpoints.

15. The method of any one of claims 11-14, further comprising:
measuring, using a sensor associated with the power device controller, a resonant current; and
calculating, based on the resonant current and using a current integrator, a total charge.
